(19) Europäisches Patentamt
European Patent Office
Office européen des brevets

(11) **EP 1 512 116 B1**

(12) **FASCICULE DE BREVET EUROPEEN**

(45) Date de publication et mention
de la délivrance du brevet:
**13.08.2008 Bulletin 2008/33**

(21) Numéro de dépôt: **03760020.2**

(22) Date de dépôt: **12.06.2003**

(51) Int Cl.:
*G06F 3/043* *(2006.01)*      *G06F 3/033* *(2006.01)*

(86) Numéro de dépôt international:
**PCT/FR2003/001769**

(87) Numéro de publication internationale:
**WO 2003/107261 (24.12.2003 Gazette 2003/52)**

(54) **PROCEDE POUR LOCALISER UN IMPACT SUR UNE SURFACE ET DISPOSITIF POUR LA MISE EN OEUVRE DE CE PROCEDE**

VERFAHREN ZUR ORTUNG EINES EINSCHLAGS AUF EINE OBERFLÄCHE UND VORRICHTUNG ZUR DURCHFÜHRUNG DIESES VERFAHRENS

METHOD FOR LOCATING AN IMPACT ON A SURFACE AND DEVICE THEREFOR

(84) Etats contractants désignés:
**AT BE BG CH CY CZ DE DK EE ES FI FR GB GR HU IE IT LI LU MC NL PT RO SE SI SK TR**

(30) Priorité: **12.06.2002 FR 0207208**

(43) Date de publication de la demande:
**09.03.2005 Bulletin 2005/10**

(73) Titulaire: **Sensitive Object**
**92100 Boulogne-Billancourt (FR)**

(72) Inventeurs:
• **ING, Ros, Kiri**
**F-75012 Paris (FR)**

• **CATHELINE, Stefan**
**F-93100 Montreuil (FR)**
• **QUIEFFIN, Nicolas**
**F-75005 Paris (FR)**
• **FINK, Mathias**
**F-92190 Meudon (FR)**

(74) Mandataire: **Burbaud, Eric**
**Cabinet Plasseraud**
**52 rue de la Victoire**
**75440 Paris Cedex 09 (FR)**

(56) Documents cités:
**EP-A- 0 474 232        FR-A- 2 757 659**
**FR-A- 2 811 107**

**Description**

La présente invention est relative aux procédés pour localiser un impact sur une surface et aux dispositifs pour la mise en oeuvre de ces procédés.

Plus particulièrement, l'invention concerne un procédé dans lequel on localise un impact sur une surface appartenant à un objet formant interface acoustique, doté d'au moins un capteur acoustique (l'objet formant interface acoustique peut être fait d'une seule pièce ou de plusieurs éléments, assemblés ou au moins en contact mutuel), procédé dans lequel on capte au moins un signal à partir d'ondes acoustiques générées dans l'objet formant interface acoustique par ledit impact et on localise l'impact par traitement dudit signal capté.

Le document FR-A-2 811 107 décrit un exemple d'un tel procédé qui s'applique en particulier à une vitre. Dans ce procédé connu, on calcule la position de l'impact sur la surface de l'objet en mesurant les différences de temps de vol des ondes acoustiques jusqu'à différents capteurs.

Ce procédé connu requiert toutefois :

- que la vitre utilisée présente une parfaite homogénéité et un parfait état de surface,
- que les champs de la vitre soient traités spécialement notamment pour éviter l es réflexions des ondes acoustiques,
- que l'on connaisse à l'avance la célérité des ondes acoustiques dans la vitre, ce qui suppose de connaître précisément sa composition,
- que l'on utilise au moins quatre capteurs.

Il en résulte que ce procédé connu est particulièrement coûteux à mettre en oeuvre et ne peut pas s'appliquer à des objets pré-existants quelconques, notamment des objet hétérogènes constitués d'assemblages de pièces, des objets de forme irrégulière, etc.

La présente invention a notamment pour but de pallier ces inconvénients.

A cet effet, selon l'invention, un procédé du genre en question est caractérisé en ce qu'il comporte une étape de reconnaissance au cours de laquelle on compare le signal capté à au moins un signal prédéterminé correspondant au signal qui est capté lorsqu'on génère un impact sur au moins une zone active appartenant à la surface de l'objet formant interface acoustique (cette comparaison, qui peut être faite aussi bien dans le domaine temporel que dans le domaine fréquentiel, peut éventuellement s'effectuer sur uniquement une partie du signal capté ou sur des données extraites du signal capté après traitement, auquel cas ledit signal prédéterminé peut être réduit à la partie sur laquelle se fait la comparaison ou aux données sur lesquelles se fait la comparaison), et on associe l'impact à ladite zone active si le signal capté est suffisamment voisin dudit signal prédéterminé.

Grâce à ces dispositions, on obtient un procédé de positionnement d'impact qui est robuste, adaptable à tous les objets (y compris les objets hétérogènes constitués par assemblage de plusieurs pièces ou par mise en contact de plusieurs pièces), facile et peu coûteux à mettre en oeuvre.

Dans des modes de réalisation préférés de l'invention, on peut éventuellement avoir recours en outre à l'une et/ou à l'autre des dispositions suivantes :

- la surface de l'objet formant interface acoustique comporte plusieurs zones actives, et au cours de l'étape de reconnaissance, on compare le signal capté à plusieurs signaux prédéterminés correspondant chacun au signal capté lorsqu'on génère un impact sur une desdites zones actives ;
- on utilise un seul capteur acoustique ;
- on utilise plusieurs capteurs acoustiques et au cours de l'étape de reconnaissance, on capte un signal pour chaque capteur acoustiques et les signaux captés par les différents capteurs acoustiques sont comparés aux signaux prédéterminés indépendamment les uns des autres ;
- les signaux captés par les différents capteurs acoustiques sont comparés aux signaux prédéterminés différemment les uns des autres ;
- on utilise plusieurs capteurs acoustiques mesurant plusieurs grandeurs différentes ;
- on utilise au plus deux capteurs acoustiques ;
- le procédé comprend une étape initiale d'apprentissage au cours de laquelle on détermine expérimentalement chaque signal prédéterminé en générant au moins un impact sur chaque zone active ;
- chaque signal prédéterminé est un signal théorique (calculé ou déterminé expérimentalement sur un objet identique ou très similaire du point de vue acoustique à celui utilisé) ;
- au cours de l'étape de reconnaissance, on compare le signal capté audit au moins un signal prédéterminé par intercorrélation ;
- au cours de l'étape de reconnaissance, on compare le signal capté audit au moins un signal prédéterminé par un procédé de reconnaissance choisi parmi une reconnaissance vocale, une reconnaissance de signaux, une reconnaissance de forme, et une reconnaissance par réseau neuronal ;

- au cours de l'étape de reconnaissance, on associe le signal capté soit à une seule zone active, soit à aucune zone active ;
- on associe chaque zone active à une information prédéterminée (par exemple, un caractère alphanumérique, une commande, etc.) et lorsqu'on associe l'impact à une zone active, on fait utiliser l'information prédéterminée correspondant à cette zone active par un dispositif électronique ;
- la surface de l'objet formant interface acoustique comporte un nombre n de zones actives, n étant au moins égal à 2, et l'étape de reconnaissance comprend les sous-étapes suivantes :

  • on procède à une intercorrélation du signal capté (généralement après normalisation) avec lesdits signaux prédéterminés $R_i(t)$, i étant un entier naturel compris entre 1 et n qui désigne une zone active, et on obtient ainsi des fonctions d'intercorrélation $C_i(t)$,
  • on détermine une zone active j potentiellement activée qui correspond au résultat d'intercorrélation $C_j(t)$ ayant un maximum d'amplitude plus élevée que ceux des autres résultats $C_i(t)$,
  • on détermine également la distribution $D(i)$ des maxima d'amplitude des résultats d'intercorrélation :

  $$D(i)=Max(\ (Ci(t)),$$

  • on détermine également la distribution $D'(i)$ des maxima d'amplitude des résultats d'intercorrélation $C'_i(t)$ entre $R_j(t)$ et les différents signaux prédéterminés $R_i(t)$ : $D'(i)=Max(\ (C'_i(t))$,
  • on détermine si l'impact a été généré sur la zone active j en fonction d'un niveau de corrélation entre les distribution $D(i)$ et $D'(i)$ ;

- au cours de l'étape de reconnaissance, on traite le signal capté pour en extraire des données représentatives de certaines caractéristiques du signal capté et on compare les données ainsi extraites à des données de référence extraites du signal qui est capté lorsqu'un impact est généré sur chaque zone active ;
- au cours de l'étape de reconnaissance, on détermine un code à partir desdites données extraites du signal capté et on compare ce code à une table qui donne une correspondance entre au moins certains codes et chaque zone active ;
- l'objet formant interface acoustique comporte au moins deux zones actives et au cours de l'étape de reconnaissance, on détermine des valeurs de ressemblance représentatives de la ressemblance entre le signal capté et les signaux prédéterminés (notamment une valeur issue de la fonction d'intercorrélation, par exemple son maximum), on associe l'impact avec plusieurs zones actives adjacentes correspondant à un maximum de ressemblance, dites zones actives de référence, puis on détermine la position de l'impact sur la surface en fonction des valeurs de ressemblance attribuées aux zones actives de référence ;
- on détermine la position de l'impact sur la surface de façon que les valeurs de ressemblance attribuées aux zones actives de référence, correspondent le mieux possible à des valeurs de ressemblance théoriques calculées pour lesdites zones actives de référence pour un impact généré dans ladite position sur la surface ;
- les valeurs de ressemblance théoriques sont des fonctions de la position de l'impact sur la surface, déterminées à l'avance pour chaque ensemble possible de zones actives de référence ;
- on identifie la zone active par comparaison entre la phase des signaux prédéterminés $R_i(t)$ et du signal capté ;
- lors de la phase d'apprentissage, on calcule la transformée de Fourier $R_i(\omega) = |R_i(\omega)|.e^{j\ \varphi i(\omega)}$ de chaque signal acoustique $R_i(t)$ généré par un impact sur la zone active i, où i est un indice compris entre 1 et n, et on ne conserve de cette transformée de Fourier que la composante de phase $e^{j\ \varphi i(\omega)}$, dans les seules bandes de fréquence $\omega$ où l'amplitude $|R_i(\omega)|$ est supérieure à un seuil prédéterminé, puis on applique le même traitement à chaque signal acoustique capté $S(t)$ pendant le fonctionnement normal du dispositif ;
- le seuil prédéterminé est égal au maximum de MAX/D et de $|B(\omega)|$, où :

  • MAX est choisi parmi la valeur maximale des modules $|R_i(\omega)|$, la valeur maximale des modules $|R_i(\omega)|$ normalisés chacun en énergie, et la valeur maximale de l'enveloppe de la moyenne des modules $|R_i(\omega)|$ normalisés chacun en énergie,
  • D est une constante,
  • $|B(\omega)|$ est la moyenne de plusieurs spectres de bruit dans l'objet formant interface acoustique, acquis à différents instants ;

- pendant le fonctionnement normal du dispositif :

- on calcule un produit $P_i(\omega)$ égal à $S'(\omega)$ multiplié par le conjugué de $R_i'(\omega)$ pour références i = 1 ... n,
- puis on normalise les produits $P_i(\omega)$,
- on effectue ensuite la transformée de Fourier inverse de tous les produits $P_i(\omega)$, et on obtient des fonctions temporelles $X_i(t)$,
- et on attribue le signal S(t) à une zone active (10) en fonction desdites fonctions temporelles $X_i(t)$ ;

- on attribue le signal S(t) à une zone active en fonction des valeurs maximales desdites fonctions temporelles $X_i(t)$.

Par ailleurs, invention a également pour objet un dispositif spécialement adapté pour mettre en oeuvre un procédé d'interfaçage tel que défini ci-dessus.

D'autres caractéristiques et avantages de l'invention apparaîtront au cours de la description suivante de cinq de ses formes de réalisation, données à titre d'exemples non limitatifs, en regard des dessins joints.

Sur les dessins :

- la figure 1 est une vue schématique en perspective montrant un exemple de dispositif comprenant une interface acoustique adaptée pour mettre en oeuvre un procédé selon une première forme de réalisation de l'invention,
- la figure 2 est un schéma bloc du dispositif de la figure 1,
- la figure 3 représente un graphe illustrant un exemple de méthode qui permet d'associer un impact sur la surface de l'interface acoustique visible sur la figure 1, avec une zone active de cette surface,
- la figure 4 représente schématiquement une interface acoustique utilisable dans un dispositif de mise en oeuvre d'un procédé selon une deuxième forme de réalisation de l'invention,
- la figure 5 est un schéma bloc d'un exemple de dispositif pouvant utiliser l'interface d'entrée de la figure 4,
- et les figures 6 à 9 représentent schématiquement des interfaces acoustiques utilisables dans un dispositif de mise en oeuvre d'un procédé selon des troisième, quatrième et cinquième formes de réalisation de l'invention.

Sur les différentes figures, les mêmes références désignent des éléments identiques ou similaires.

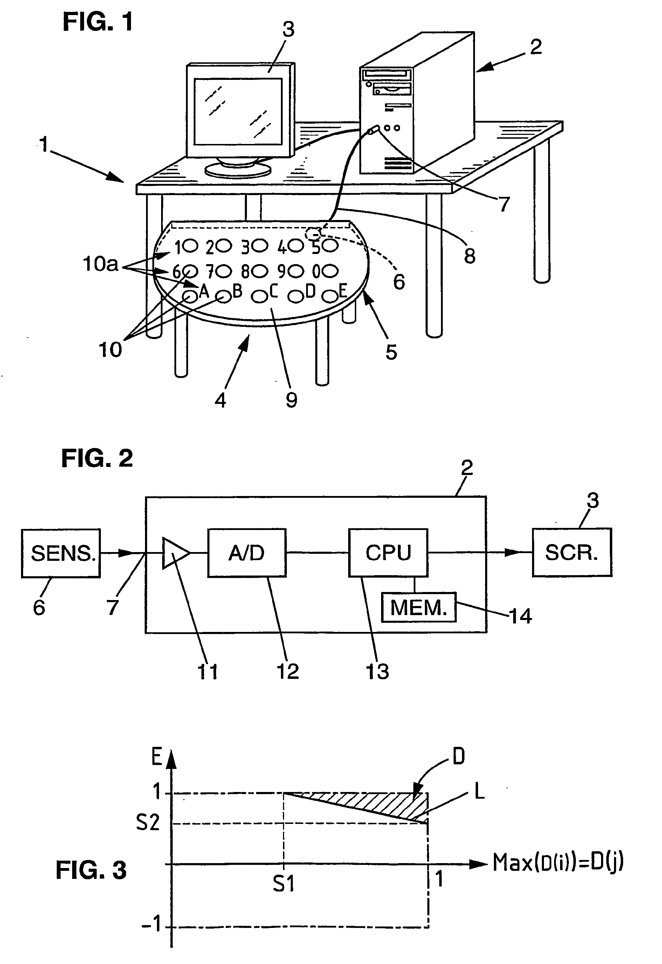

La figure 1 représente un dispositif 1 destiné à mettre en oeuvre la présente invention, qui comporte par exemple :

- une unité centrale 2 de micro-ordinateur,
- un écran 3 relié à l'unité centrale 2,
- et une interface d'entrée acoustique 4 qui permet de communiquer des informations à l'unité centrale 2 dans l'exemple considéré.

L'interface d'entrée acoustique 4 comprend un objet solide 5, constitué ici par une table dans laquelle on fait propager des ondes acoustiques en générant des impacts sur sa surface 9, comme il sera expliqué ci-après.

On notera toutefois que l'objet formant interface acoustique pourrait être constitué par tout autre objet, homogène ou hétérogène, constitué d'une seule pièce ou de plusieurs pièces assemblées ou simplement en contact mutuel, tel que : vitre, porte, fenêtre, tablette portative, écran d'ordinateur, panneau d'affichage, borne interactive, jouet, tableau de bord de véhicule, arrière de dossier de siège avant de véhicule automobile ou de siège d'avion, mur, sol, pare-chocs de véhicule (l'information transmise par l'interface acoustique étant alors la position d'un impact sur le pare-chocs), etc..

Au moins un capteur acoustique 6 (un seul capteur 6 dans l'exemple représenté) est fixé à l'objet 5, ce capteur acoustique 6 étant relié par exemple à l'entrée microphonique 7 de l'unité centrale 2, par l'intermédiaire d'un câble 8 ou par tout autre moyen de transmission (radio, infra-rouge ou autre), de façon à capter lesdites ondes acoustiques et les transmettre à l'unité centrale 2.

Le capteur acoustique 6 peut être par exemple un capteur piézo-électrique, ou autre (par exemple, un capteur capacitif, un capteur magnétostrictif, un capteur électromagnétique, un vélocimètre acoustique, un capteur optique [interféromètre laser, vibromètre laser, ...], etc.). Il peut être adapté pour mesurer par exemple les amplitudes des déplacements dus à la propagation des ondes sonores dans l'objet 5 formant interface acoustique, ou encore la vitesse ou l'accélération de tels déplacements, ou bien encore il peut s'agir d'un capteur de pression mesurant les variations de pression dues à la propagation des ondes acoustiques dans l'objet 5.

Sur la surface externe 9 de l'objet 5 (en l'occurrence sur la face supérieure de la table constituant ledit objet 5 dans l'exemple représenté sur la figure 1), sont définies plusieurs zones actives 10, qui peuvent être délimitées par exemple :

- par un marquage physique, amovible ou non, apposé sur la surface 9 de l'objet 5,
- ou encore par un marquage lumineux obtenu par projection d'une image sur la surface 9.

La surface 9 pourrait aussi comporter des parties où l'on interdirait de générer un impact par exemple en les recouvrant d'un matériau souple ou simplement inaccessible à l'utilisateur, notamment pour une meilleure fiabilité du système.

Les différentes zones actives 10 peuvent être simplement des portions de la surface 9, identiques au reste de la surface 9. Ces zones actives se différencient toutefois les unes des autres et du reste de la surface 9, dans la mesure où un impact sur une des zones 10 génère un signal acoustique différent du signal généré par un impact sur une autre des zones actives 10 ou sur une autre partie de la surface 9.

Chacune des zones actives 10 est associée à une information prédéterminée qu'un utilisateur peut vouloir communiquer à l'unité centrale 2. L'information en question peut par exemple être une commande, un chiffre, une lettre, une position sur la surface 9, ou toute autre information pouvant être habituellement transmise à un dispositif électronique tel qu'un micro-ordinateur (ou à l'unité centrale d'un autre appareil électronique) au moyen des interfaces d'entrées classiques telles que claviers, boutons de commande, souris ou autres.

Les informations en question peuvent éventuellement être indiquées en clair par des marquages 10a sur la surface 9 (comme pour les repères des zones 10, ces marquages peuvent être apposés physiquement sur la surface 9 de manière définitive ou amovible, ou encore ils peuvent être projetés sous forme d'images lumineuses sur ladite surface 9).

En variante, la surface 9 de l'objet 5 peut simplement comporter des repères (apposés physiquement ou lumineux) permettant de distinguer les zones actives les unes des autres. Ces repères peuvent par exemple être des numéros ou des couleurs, et leur signification peut éventuellement être rappelée par un affichage généré par l'unité centrale 2 sur l'écran 3.

Eventuellement, la surface 9 peut aussi ne comporter aucun marquage, ni pour délimiter les zones actives, ni pour identifier les informations auxquelles elles correspondent, auquel cas les zones actives 10 ne seraient connues que des seuls utilisateurs autorisés du dispositif 1.

On notera que les informations prédéterminées associées à chaque zone active 10 peuvent être soit toujours les mêmes, soit varier en fonction du déroulement d'un programme dans l'unité centrale 2, soit encore dépendre des actionnements précédents d'autres zones actives 10 (certaines zones actives 10 peuvent par exemple être actionnées pour changer la fonction attribuée à une ou plusieurs zone(s) active(s) 10 actionnée(s) après elle, de façon, par exemple, à accéder à des fonctions spécifiques, à des caractères spéciaux, ou encore pour mettre des lettres en majuscules, etc.).

Les différentes zones actives 10 de l'objet 5 constituent donc un véritable clavier virtuel que l'on actionne en tapant sur les zones actives, indifféremment avec l'ongle d'un doigt, avec l'extrémité des doigts, avec un objet tel que stylo, stylet ou autre.

On notera que la surface 9 de l'objet 5 pourrait le cas échéant comporter une seule zone active 10 dans les cas les plus simples, cette zone active 10 ne s'étendant toutefois pas à l'ensemble de la surface 9 et constituant de préférence une faible portion de ladite surface 9.

Comme représenté sur la figure 2, le capteur 6 (SENS.) peut classiquement être relié par intermédiaire de l'entrée 7 à un amplificateur 11 lui-même relié à un convertisseur analogique-numérique 12 (A/D) qui transmet les signaux reçus au processeur 13 de l'unité centrale 2 (CPU) lequel processeur est lui-même relié à une ou plusieurs mémoires 14 (MEM.) et commande l'écran 3 susmentionné (SCR.) ou toute autre interface de sortie renvoyant des informations vers l'utilisateur.

On notera que l'interface acoustique 4 pourrait servir d'interface d'entrée d'informations vers tous autres dispositifs électroniques qu'un micro-ordinateur, par exemple un appareil électronique ménager ou professionnel, un digicode, une unité centrale électronique de véhicule, etc. Dans tous les cas, les signaux électriques générés par le ou les capteurs 6 peuvent être traités soit dans cet appareil électronique, soit dans un dispositif numérique externe de traitement du signal (DSP).

Pendant l'utilisation du dispositif 1 décrit précédemment, lorsqu'un utilisateur génère un impact sur la surface 9 de l'objet 5, cet impact engendre une onde acoustique qui se propage dans l'objet 5 jusqu'au capteur acoustique 6. Le capteur acoustique 6 génère alors un signal électrique $S(t)$ qui, après numérisation, est traité par le processeur 13 (ou par un autre processeur dédié, interne ou externe à l'unité centrale 2).

Le processeur 13 compare ensuite le signal reçu avec différents signaux prédéterminés appartenant à une bibliothèque de signaux mémorisés préalablement dans la mémoire 14, ces signaux prédéterminés correspondant respectivement à des impacts générés sur les différentes zones actives 10 de l'objet 5.

Cette comparaison permet de savoir si le signal acoustique provient d'une des zones actives 10, et laquelle, quel que soit le mode d'excitation de ladite surface active (impact d'un ongle, d'une extrémité de doigt, d'une paume de main, d'un objet tel qu'un stylo ou un stylet, etc.).

Les signaux prédéterminés de la bibliothèque de signaux peuvent avoir été déterminés au cours d'une phase d'apprentissage initial dans laquelle on génère des impacts successivement sur toutes les zones actives 10 de l'objet 5, en enregistrant les signaux correspondants (de préférence après normalisation, par exemple pour que l'énergie de chaque signal de référence soit égale à 1) reçus dans l'unité centrale 2 par l'intermédiaire du capteur acoustique 6.

En variante, lorsque l'objet 5 a une forme géométrique simple et/ou répétitive, il est possible que les signaux prédéterminés de la bibliothèque de signaux soient obtenus par modélisation ou soient déterminés expérimentalement une seule fois pour tous les objets 5 d'une série d'objets identiques : dans ces deux cas, il n'y aurait donc pas de phase préalable d'apprentissage pour l'objet 5 particulier connecté à l'unité centrale 2, mais simplement installation de la bibliothèque de signaux dans la mémoire 14 de ladite unité centrale.

On notera que dans certains cas (notamment si l'objet 5 est en bois), on peut faire varier les signaux prédéterminés de la bibliothèque de signaux en fonction des conditions ambiantes, notamment la température et l'humidité. Ces variations peuvent être calculées ou bien résulter d'une nouvelle phase d'apprentissage.

La comparaison des signaux reçus pendant l'utilisation du dispositif 1, avec les signaux prédéterminés de la bibliothèque de signaux, peut être effectuée :

- directement sur les signaux temporels S(t) reçus du capteur 6,
- ou encore sur le spectre en fréquence de ces signaux (par exemple après transformée de Fourier des signaux temporels reçus du capteur 6),
- ou sur d'autres données caractéristiques du signal, notamment sa phase.

La comparaison des signaux captés avec les signaux prédéterminés de la bibliothèque de signaux peut être effectuée par tout moyen connu, notamment :

- par intercorrélation,
- par des procédés connus de reconnaissance vocale, de reconnaissance de signaux ou de reconnaissance de forme,
- par utilisation de réseaux neuronaux, ou autres.

A titre d'exemple plus précis, on peut notamment utiliser, pour reconnaître la zone active 10 d'où vient le signal capté S(t), le procédé suivant :

(1) Après normalisation du signal capté S(t) (par exemple, on calibre S(t) pour que son énergie soit égale à 1), on procède à une intercorrélation du signal S(t) généré par le capteur 6 avec les n signaux prédéterminés de la bibliothèque également normalisés, notés $R_i(t)$ avec i=1..n. On obtient ainsi des fonctions $C_i(t)$, qui sont les résultats temporels du produit d'intercorrélation du signal S(t) respectivement avec les signaux $R_i(t)$ de la bibliothèque. A partir de ces calculs, on détermine une zone active potentiellement activée j correspond au résultat d'intercorrélation $C_j(t)$ ayant un maximum d'amplitude plus élevée que ceux des autres résultats $C_i(t)$.

(2) On détermine également la distribution D(i) des maxima d'amplitude des résultats d'intercorrélation :

$$D(i)=Max( (C_i(t)) \text{ avec } i=1..n.$$

(3) On calcule une deuxième fonction de distribution D'(i) obtenue de façon identique au calcul de la fonction D(i) mais en remplaçant S(t) par $R_j(t)$.

(4) On procède à une intercorrélation des distributions des maximas d'amplitudes D(i) et D'(i). Si l'amplitude maximale E du résultat d'intercorrélation entre D(i) et D'(i) est suffisante, alors j est le numéro considéré de la zone activée. Sinon, le signal généré par le capteur correspond à une fausse alerte.

Au cours de cette étape (4), on peut simplement calculer E et la valeur maximale de D(i), soit Max(D(i)) : si l'on considère ces deux valeurs comme les coordonnées d'un point dans un espace bidimensionnel d'axes x=Max(D(i)) et y=E, comme représenté sur la figure 3, on peut déterminer à l'avance (empiriquement ou par le calcul) une courbe seuil L qui délimite un domaine D correspondant aux points validés (ce domaine est fini et limité à x=1 et y=1, valeurs maximales absolues de D(i) et E. Les signaux captés qui donnent des points hors du domaine D, quant à eux, sont éliminés comme étant de fausses alertes.

Dans l'exemple considéré, la ligne D est une droite qui peut passer par exemple par les points (S1, 0) et (0, S2). Par exemple, S1=0,4 et S2=0,4 ou 0,6.

On notera qu'en plus d'identifier la zone active 10 d'où vient l'impact, il serait possible de mesurer la force de l'impact, par exemple pour guider l'utilisateur dans sa façon de se servir de l'interface acoustique, ou encore pour moduler l'action déclenchée par un impact sur une zone active 10, selon l'intensité de cet impact.

On notera par ailleurs que la reconnaissance des signaux provenant des zones actives 10 peut éventuellement se faire en utilisant uniquement une partie des signaux S(t) reçus ou une partie de leur spectre en fréquence ou plus généralement une partie de leurs caractéristiques. Dans ce cas, au cours de l'étape de reconnaissance, on traite le signal capté pour en extraire des données représentatives de certaines caractéristiques du signal capté et on compare les données ainsi extraites à des données de référence extraites du signal qui est capté lorsqu'un impact est généré sur chaque zone active.

Ainsi, il est par exemple possible de mesurer l'amplitude et la phase du signal pour m fréquences prédéterminées (m étant un entier naturel au moins égal à 1), et de comparer ces amplitudes mesurées a1-am et ces phases mesurées p1-pn avec les amplitudes Ai1-Aim et les phases Pi1-Pim mesurées auxdites fréquences prédéterminées à partir des signaux reçus au cours de la phase d'apprentissage (ou déterminés par modélisation) pour les différentes zones actives 10 de numéro i (i étant compris entre 1 et n, où n est le nombre de zones actives 10).

En variante, il est possible de déterminer un code à partir desdites données extraites du signal capté et de comparer ce code à une table qui donne une correspondance entre au moins certains codes et chaque zone active (les codes contenus dans cette table représentent alors les signaux prédéterminés de la bibliothèque de signaux mentionnée précédemment).

A titre d'exemple non limitatif, on peut déterminer un code à 16 bits à partir du signal capté S(t), de la façon suivante :

- les 8 premiers bits du code sont déterminés à partir du spectre en fréquence du signal S(t) que l'on subdivise en 8 tranches fréquentielles prédéterminées [$f_k$, $f_{k+1}$], k=1..8 : le bit de rang k est égal à 1 par exemple si la valeur finale d'énergie donnée par le spectre à la fréquence $f_{k+1}$ est supérieure à la valeur moyenne d'énergie de l'onde acoustique dans la tranche de fréquence [$f_k$, $f_{k+1}$], et ce bit vaut 0 dans le cas contraire ;
- les 8 derniers bits du code sont déterminés à partir du signal temporel S(t) que l'on subdivise en 9 tranches temporelles prédéterminées [$t_k$, $t_{k+1}$], k=1..9 : le bit de rang k+8 est égal à 1 par exemple si la valeur moyenne de la puissance du signal pendant l'intervalle de temps [$t_k$, $t_{k+1}$] est supérieure à la valeur moyenne de la puissance du signal pendant l'intervalle de temps [$t_{k+1}$, $t_{k+2}$], pou k=1..8, et ce bit vaut 0 dans le cas contraire.

Dans cet exemple particulier, les codes de la table de correspondance seraient déterminés lors de la phase d'apprentissage, en calculant comme indiqué ci-dessus les codes qui correspondent aux signaux captés par le capteur acoustique 6 lorsqu'on génère des impacts sur les différentes zones actives 10.

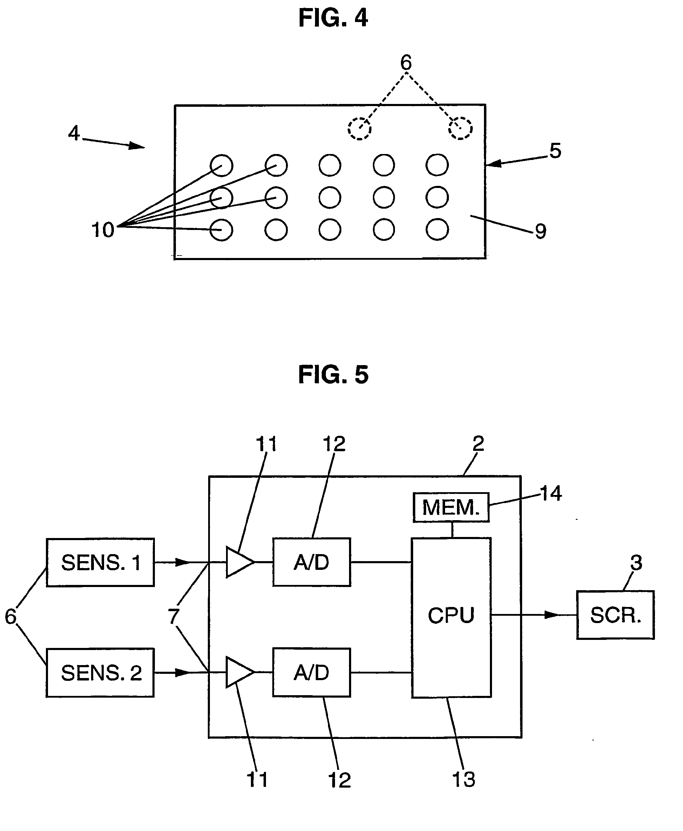

Par ailleurs, comme représenté sur les figures 4 et 5, il peut être possible d'utiliser deux capteurs acoustiques 6 (SENS.1 et SENS.2), notamment lorsque l'objet 5 présente des symétries telles qu'il puisse exister un risque de confusion entre les signaux provenant de deux zones actives 10 différentes. Le cas échéant, on pourrait utiliser plus de deux capteurs acoustiques 6, bien que les solutions préférées fassent appel à un ou deux capteurs 6.

Lorsque deux capteurs ou plus sont utilisés, deux choix sont possibles :

1) mélange des signaux des différents capteurs et traitement du signal global suivant le procédé décrit ci-dessus.

2) ou, de façon préférée, traitement individuel des signaux des différents capteurs avec le procédé décrit ci-dessus et recoupement des résultats :

- si les zones actives 10 déterminées à partir des différents capteurs ont des numéros identiques alors on détermine que la zone qui a reçu un impact est celle-ci,
- dans les autres cas, on peut soit considérer le signal capté comme étant une fausse alerte, soit déterminer la zone qui a reçu un impact par exemple par intercorrélation entre les fonctions d'intercorrélation Ci(t) déterminées pour chaque capteur, ou par des moyens plus complexes tels que réseaux de neurones ou autres.

On notera que les deux capteurs acoustiques peuvent être de types différents et/ou capter des grandeurs différentes et/ou leurs signaux peuvent être traités différemment pour identifier les zones actives 10 recevant des impacts. Par exemple, l'un des capteurs acoustiques peut servir à enregistrer le signal S(t) reçu, tandis que l'autre peut servir uniquement à déterminer un décalage temporel entre l'arrivée de l'onde acoustique sur les deux capteurs.

Le second capteur pourrait par ailleurs ne pas capter l'onde acoustique propagée dans l'objet solide 5, mais l'onde acoustique propagée dans l'air lors de l'impact.

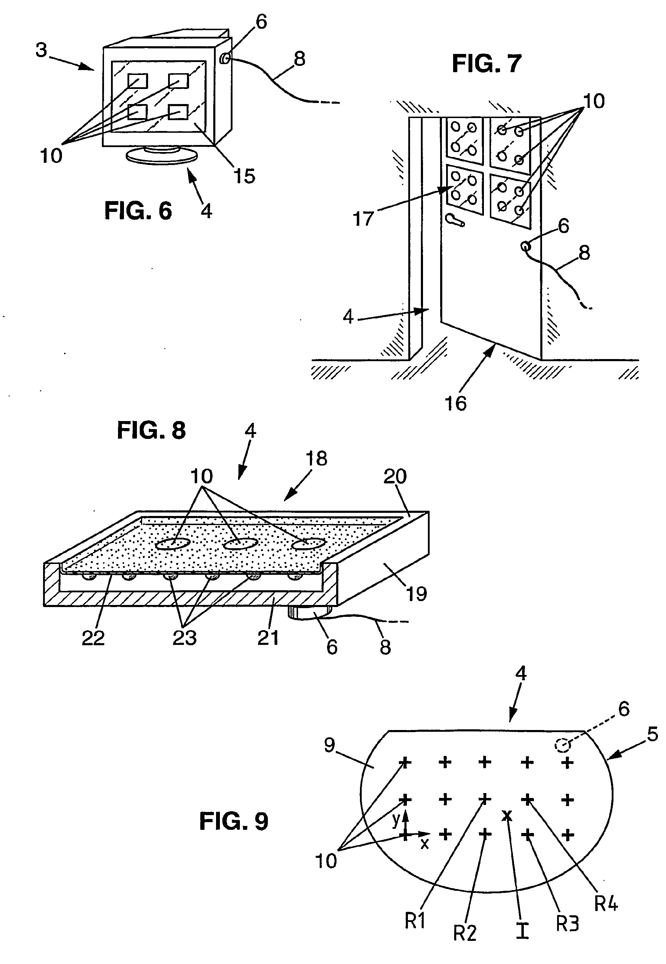

Comme représenté sur la figure 6, l'objet formant interface acoustique peut être constitué par un écran d'ordinateur 3 ou un écran de télévision auquel on fixe le capteur 6. La surface recevant les impacts peut être avantageusement la vitre 15 de l'écran, ce qui peut permettre notamment de faire afficher par l'écran 3 la délimitation des zones actives 10 et leur signification. Cette variante serait utilisable par exemple pour programmer un magnétoscope, notamment dans le cas où l'écran 3 serait un écran de télévision (l'unité centrale 2 serait alors remplacée par le magnétoscope).

Comme représenté sur la figure 7, l'objet formant interface acoustique peut également être constitué par une porte vitrée 16 ou similaire. Dans l'exemple représenté sur la figure 7, la surface 17 qui porte les zones actives 10 est constituée par la surface vitrée de la porte, et, toujours dans l'exemple particulier représenté sur cette figure, le capteur acoustique 6 est fixé sur une partie en bois de la porte 16.

Dans l'exemple représenté sur la figure 8, l'objet formant interface acoustique est une tablette 18 conçue spécifiquement pour servir d'interface acoustique. Cette tablette peut par exemple comporter un cadre rigide 19 solidaire d'un fond 20 également rigide qui porte le capteur acoustique 6.

Une membrane souple 22, réalisée par exemple en élastomère, est tendue sur le cadre 19 à faible distance au-dessus du fond 21. Cette membrane souple 22 est pourvue de picots rigides 23 sous sa face inférieure (il peut s'agir par exemple de demi-sphères de verre qui sont collées sous la membrane 22). Ainsi, lorsqu'un utilisateur tape sur la membrane 22 et notamment sur une zone active 10 portée par cette membrane, cette action génère un impact d'au moins un picot 23 sur le fond 21 du cadre de la tablette 18. Cette variante présente l'avantage de produire des impacts dépendants relativement peu de la façon dont l'utilisateur tape sur la membrane 22 (avec le doigt ou l'ongle ou un outil, avec plus ou moins de force, etc.).

Dans les modes de réalisation des figures 6 à 8, le procédé mis en oeuvre peut être identique ou similaire à celui décrit précédemment et permettre de faire correspondre un impact généré sur la surface de l'objet formant interface acoustique, soit avec une zone active 10, soit avec aucune zone active.

Mais il est aussi possible, dans tous les modes de réalisation de l'invention faisant appel à plusieurs surfaces actives (éventuellement ponctuelles), de déterminer la position de l'impact sur la surface 9 de l'objet 5 formant interface acoustique (voir l'exemple de la figure 9), même lorsque cet impact n'est pas sur une des zones actives. On obtient ainsi une interface acoustique continue ou pseudo-continue (permettant un fonctionnement similaire par exemple à une souris d'ordinateur, à un crayon optique, à un écran tactile ou similaires).

Dans ce cas, au cours de l'étape de reconnaissance :

- on détermine des valeurs de ressemblance représentatives de la ressemblance entre le signal capté et les signaux prédéterminés (notamment des valeurs issues de des fonctions d'intercorrélation Ci(t) susmentionnées, par exemple leur maxima D(i) défini ci-dessus),
- on associe l'impact avec un nombre p au moins égal à 2 de zones actives adjacentes correspondant à un maximum de ressemblance, dites zones actives de référence R1-R4 (p peut valoir avantageusement 4 notamment pour positionner l'impact selon deux dimensions x, y, ou le cas échéant moins de 4 notamment si l'impact ne doit être positionné que selon une seule dimension x ou y): on peut par exemple déterminer en premier lieu la zone R1 comme étant la zone active 10 ayant la valeur ressemblance D(i) maximale, puis déterminer, parmi les zones actives adjacentes à R1, les trois zones R2-R4 qui donnent les valeurs les plus élevées de la valeur de ressemblance D(i)) ;
- puis on détermine la position de l'impact I sur la surface 9 en fonction des valeurs de ressemblance D(i) attribuées aux zones actives de référence R1-R4.

Au cours de cette dernière étape, on peut avantageusement déterminer la position de l'impact sur la surface de façon que les valeurs de ressemblance attribuées aux zones actives de référence, correspondent le mieux possible à des valeurs de ressemblance théoriques calculées pour lesdites zones actives de référence pour un impact généré dans ladite position sur la surface.

Ces valeurs de ressemblance théoriques peuvent notamment être des fonctions de la position de l'impact sur la surface, déterminées à l'avance pour chaque ensemble possible de zones actives de référence.

Les fonctions en question peuvent être déterminées lors de l'étape d'apprentissage, par exemple en ajustant une fonction-type sur les valeurs de ressemblance des zones actives entre elles. La fonction-type en question peut dépendre de la forme de l'objet et être déterminée à l'avance, soit de façon théorique, soit expérimentalement.

Pour prendre un exemple concret, la fonction de ressemblance théorique Rth(X,Y) entre deux points X, Y de la surface 9 peut correspondre au maximum de la fonction d'intercorrélation entre les signaux Sx(t) et Sy(t) captés par le capteur 6 respectivement lorsque des impacts sont générés en ces deux points X, Y, et cette fonction peut par exemple être du type $Rth(X, Y) = (sin(a(\beta).d)) / (a(\beta).d)$, approximé par exemple par $Rth(X, Y) = 1 - [a(\beta).d]^2/6$, où :

- d est la distance entre X et Y,
- $\beta$ est un angle entre par exemple l'axe x (ou l'axe y) et la direction X-Y,
- et $a(\beta)$ est un coefficient dépendant de l'angle $\beta$ selon une fonction elliptique :

$$a(\beta) = a1.\cos(\beta+\beta0) + a2.\sin((\beta+\beta0),$$

où $\beta0$ est un angle représentatif de l'orientation de l'ellipse.

On peut déterminer la fonction Rth pour chaque ensemble possible de zones actives de références R1-R4, à partir des signaux prédéterminés Ri(t) de la bibliothèque de signaux, captés en générant des impacts respectivement sur ces zones actives de référence au cours de la phase d'apprentissage.

A cet effet, pour un ensemble donné de quatre zones de référence R1-R4, on peut calculer le maximum de la fonction d'intercorrélation du signal R1(t) correspondant à R1, avec chacun des signaux R2(t), R3 (t), R4 (t) correspondant aux zones R2-R4. On en déduit des valeurs de a1, a2 et β0. On peut procéder ensuite de même à partir des zones de référence R2, R3 et R4, ce qui donne à chaque fois des valeurs de a1, a2 et β0, puis prendre la moyenne des quatre valeurs ainsi trouvées respectivement pour a1, a2 et β0 : ces valeurs moyennes déterminent alors la fonction Rth pour l'ensemble de zones de référence R1-R4. En variante, la fonction Rth pourrait être déterminée par un processus itératif d'optimisation (de type méthode des moindres carrés) pour minimiser une fonction d'erreur entre la fonction de ressemblance théorique et les maxima des fonctions d'intercorrélation entre les signaux R1(t), R2(t), R3(t) et R4(t) pris deux à deux.

Une fois déterminées les fonctions de ressemblance théoriques Rth susmentionnées, lorsqu'on cherche à déterminer la position d'un impact I entre quatre zones actives adjacentes R1-R4 (avantageusement ponctuelles), cette position peut par exemple être déterminée par un processus itératif d'optimisation en minimisant une fonction d'erreur entre les valeurs D(i) définies précédemment (D(i)=Max(Ci(t)) i étant ici le numéro de la zone active de référence Ri considérée) et les valeurs de ressemblance théorique Rth(I, Ri). Par exemple, on peut minimiser une fonction d'erreur E égale à la somme des valeurs (D(i)-Rth(I, Ri))$^2$.

Le procédé qui vient d'être décrit ne se limite bien entendu pas aux exemples qui viennent d'être décrits ; il a de nombreuses applications, parmi lesquelles :

- l'utilisation de vitres ou d'autres surfaces à titre d'interface d'entrée 4, dans des magasins, des musées, des galeries d'art, ou autres pour permettre aux clients ou aux visiteurs de se faire présenter des détails sur un écran ou au moyen d'un haut parleur concernant les produits ou les oeuvres exposés,
- l'utilisation de vitres ou autres surfaces de panneaux d'affichage comme interfaces d'entrée 4, permettant aux passants de se faire présenter par exemple des détails sur les publicités en cours d'affichage, ou encore de se faire présenter des informations générales concernant une commune ou un autre lieu (par exemples, des actualités ou des informations pratiques, par exemple un plan du lieu), ou autres, ces détails ou informations étant présentés par exemple sur un écran visible en partie inférieure du panneau d'affichage,
- l'utilisation de parties de murs, du sol, ou de tout autre objet comme interface d'entrée 4 par exemple pour commander des systèmes domotiques (on peut ainsi notamment permettre aux habitants d'un appartement de déterminer eux-mêmes les emplacements des interrupteurs, constitués simplement par les zones actives 10 susmentionnées, positionnées sur les murs ou autres aux endroits souhaités),
- l'utilisation de parties de murs, du sol, ou de tout autre objet comme interface d'entrée 4 par exemple pour commander des machines industrielles notamment en milieu hostile (lieux contenant des explosifs, lieux à température élevée, lieux à radioactivité élevée, etc.),
- l'utilisation de surfaces lisses et faciles d'entretien comme interface d'entrée 4, pour constituer des claviers d'entrée d'objets domestiques tels que réfrigérateur, machine à laver ou autres,
- l'utilisation de panneaux de portes d'immeubles comme interfaces d'entrée 4, constituant par exemple des claviers virtuels de digicode,
- l'utilisation du sol pour localiser la position d'une personne marchant dessus,
- la réalisation de claviers ou panneaux de commande insensibles aux pollutions, intempéries ou aux autres agressions extérieures, dans des applications industrielles, militaires ou même domestiques (le ou les capteurs acoustiques peuvent éventuellement être totalement intégrés à l'objet qui sert d'interface d'entrée, notamment s'il s'agit d'un objet au moins partiellement moulé en matière plastique) ; lorsque ces interfaces d'entrée doivent commander un dispositif (par exemple un micro-ordinateur) comprenant un écran de visualisation, le clavier ou panneau de commande acoustique peut être constitué par l'écran lui-même ou par une paroi transparente recouvrant cet écran.
- la réalisation d'interfaces d'entrée dans des automobiles ou autres véhicules.

On notera par ailleurs que l'interface d'entrée 4 décrite précédemment pourrait être dotée de moyens de traitement permettant d'effectuer localement la reconnaissance des signaux acoustiques S(t) provenant des zones actives 10, l'interface d'entrée 4 envoyant alors directement à l'unité centrale 2, ou à tout autre appareil électronique utilisateur, uniquement des signaux codés indiquant directement quelle zone active 10 a été touchée par l'utilisateur et le cas échéant des informations relatives à l'impact: force de l'impact et nature de l'impact.

On notera que le procédé selon l'invention ne requiert pas que l'objet 5 présente une structure homogène ou prédéterminée, ou soit réalisé avec un soin particulier, ou soit réalisé avec des dimensions très précises, ou avec des états de surface spécifiques. Bien au contraire, plus l'objet 5 est hétérogène et/ou irrégulier, plus les signaux acoustiques émis par les différentes zones actives 10 seront différents les uns des autres, et meilleure sera la reconnaissance des signaux acoustiques. On peut même dans certains cas créer volontairement des hétérogénéité telles que cavités ou autres dans l'objet 5 pour faciliter la reconnaissance des signaux acoustiques provenant des zones actives 10.

Par ailleurs, lorsque les signaux prédéterminés de la bibliothèque de signaux sont déterminés au cours d'une phase d'apprentissage, il est possible d'utiliser un capteur piézo-électrique relié par tous moyens connus à l'unité centrale 2 et fixé soit au doigt de l'utilisateur, soit à l'objet (stylet ou autre) utilisé pour générer des impacts sur les zones actives de l'objet 5. Dans ce cas, le signal impulsionnel généré par le capteur piézo-électrique lors de chaque impact peut être utilisé pour déclencher l'acquisition du signal acoustique prédéterminé destiné à alimenter la bibliothèque de signaux, et/ou pour mesurer l'intensité de l'impact, cette mesure d'intensité pouvant être utilisée par exemple pour invalider certaines acquisitions de signaux prédéterminés notamment lorsque l'intensité est inférieure à un seuil prédéterminé ou lorsque cette intensité n'est pas comprise dans un intervalle prédéfini.

Par ailleurs, lorsque les signaux prédéterminés de la bibliothèque de signaux sont déterminés au cours d'une phase d'apprentissage, il peut être avantageux de ne retenir que les signaux acoustiques captés dont l'amplitude est supérieure à un premier seuil de référence relativement élevé. Dans ce cas, pendant le fonctionnement normal du dispositif, on peut ensuite prendre en compte les signaux acoustiques dont l'amplitude dépasse un deuxième seuil prédéterminé nettement inférieur au premier seuil. Le premier seuil prédéterminé peut ainsi être égal à plusieurs fois (au moins deux à trois fois) la valeur moyenne temporelle de l'amplitude absolue du bruit ambiant, mesuré par exemple sur quelques secondes, tandis que le deuxième seuil prédéterminé peut par exemple être égal à 1,5 fois cette valeur moyenne. De cette façon, on n'enregistre que des signaux de référence de bonne qualité lors de la phase d'apprentissage, tout en conservant une grande sensibilité du dispositif pendant son fonctionnement normal.

Le cas échéant, l'unité centrale 2 peut être dotée d'un clavier auxiliaire de programmation (non représenté) qui peut être utilisé notamment pendant la phase d'apprentissage, pour indiquer par exemple quel type de signal est généré. Le type de signal généré peut notamment être l'un des types suivants :

- nouveau signal en remplacement d'un des signaux de référence de la bibliothèque de signaux (l'identification du signal de référence remplacé peut ainsi être communiquée à l'unité centrale 2 au moyen du clavier auxiliaire),
- nouveau signal de référence (soit pour une bibliothèque de référence préexistante mais incomplète, soit pour une nouvelle bibliothèque de référence correspondant notamment à de nouvelles conditions de température, d'humidité ou d'état de l'objet 5),
- nouveau signal destiné à vérifier un signal de référence déjà existant dans une bibliothèque de signaux.

Par ailleurs, lorsque les signaux prédéterminés de la bibliothèque de signaux sont déterminés au cours d'une phase d'apprentissage, il peut être prévu le cas échéant de ne valider les signaux de référence de cette bibliothèque que lorsque ils sont confirmés par génération d'un ou plusieurs impacts(s) sur la même zone active, dans un laps de temps prédéterminé suivant la génération d'un premier impact.

Lorsque les signaux prédéterminés de la bibliothèque de signaux sont déterminés aux cours d'une phase d'apprentissage, les impacts générés sur l'objet 5 au cours de cette phase d'apprentissage peuvent être générés :

- soit avec un objet dur tel qu'un stylet, auquel cas le même stylet sera de préférence utilisé pendant le fonctionnement normal du dispositif,
- soit avec un objet plus amortissant tel que par exemple une gomme plastique dure fixée à l'extrémité d'un stylo ou similaire (les inventeurs ont ainsi pu obtenir de bons résultats avec une gomme plastique dure pour transparents de marque "Staedler"), auquel cas les impacts sur l'objet 5 peuvent ensuite être générés aussi bien avec des objets relativement durs qu'avec des objets moins durs (ongle du doigt, pulpe du doigt ou autre) pendant le fonctionnement normal du dispositif.

Par ailleurs, en variante du procédé décrit précédemment pour reconnaître la zone active 10 d'où vient le signal capté S(t), il est possible d'utiliser le procédé suivant :

(1) lors de la phase d'apprentissage, on calcule la transformée de Fourier $R_i(\omega)$ de chaque signal acoustique $R_i(t)$ généré par un impact sur la zone active i, où i est un indice compris entre 1 et n :

$$R_i(\omega) = |R_i(\omega)| . e^{j \, \varphi i(\omega)}$$

On ne conserve de cette transformée de Fourier que la composante de phase, dans les seules bandes de fréquence $\omega$ où l'amplitude du spectre est supérieure à un seuil prédéterminé.

La forme fréquentielle du signal de référence conservé s'exprime donc sous la forme $R'_i(\omega) = e^{j \, \varphi i(\omega)}$ pour les fréquences $\omega$ auxquelles $|R_i(\omega)|$ est supérieur au seuil prédéterminé, et $R'_i(\omega) = 0$ aux autres fréquences $\omega$.

Le seuil prédéterminé en question peut être par exemple égal au maximum de MAX/D et de $|B(\omega)|$, où :

- MAX peut être soit la valeur maximale de $|R_i(\omega)|$, soit la valeur maximale des modules $|R_i(\omega)|$ normalisés chacun en énergie, soit la valeur maximale de l'enveloppe de la moyenne des modules $|R_i(\omega)|$ normalisés chacun en énergie,
- D est une constante, par exemple égale à 100,
- $IB(w)I$ 1 est la moyenne de plusieurs spectres de bruit dans l'objet 5, acquis à différents instants.

(2) Pendant le fonctionnement normal du dispositif, chaque signal capté S(t) subit le même traitement qu'à l'étape (1) ci-dessus, de sorte que l'on obtient un signal $S'(\omega) = e^{j\psi(\omega)}$ pour les fréquences $\omega$ auxquelles $|S(\omega)|$ est supérieur au seuil prédéterminé susmentionné, $S'(\omega)$ étant égal à 0 aux autres fréquences.

(3) On calcule ensuite un produit $P_i(\omega)$ égal à $S'(\omega)$ multiplié par le conjugué de $R'(\omega)$ pour i = 1 ...n.

(4) On normalise les produits $P_i(\omega)$ en les divisant par leurs intégrales.

(5) On effectue ensuite la transformée de Fourier inverse de tous les produits $P_i(\omega)$, et on obtient des fonctions temporelles $X_i(t)$.

Suivant les différentes fonctions $X_i(t)$, et notamment suivant leur maximum, on peut alors attribuer le signal S(t) à une des zones actives 10. A titre d'exemple, on peut calculer la valeur maximale (en valeur relative ou en valeur absolue), des différentes fonctions $X_i(t)$, et attribuer le signal S(t) à la zone active i qui correspond à la fonction $X_i(t)$ présentant le plus grand maximum. Eventuellement, on peut également comparer le maximum de la fonction $X_i(t)$ retenue avec un seuil défini à l'avance, par exemple égal à 0,6, et décider que le signal S(t) doit être attribué à la zone i lorsque le maximum de $X_i(t)$ est supérieur à ce seuil (si plusieurs fonctions $X_i(t)$ ont leur maximum supérieur à 0,6, on ne conserve alors que la fonction $X_i(t)$ de plus grand maximum).

Il est possible éventuellement de vérifier que l'attribution du signal S(t) à la zone active i est correct, par exemple en calculant une valeur $MM_i = M_i/M$ où $M_i$ est le maximum de la valeur absolue de $X_i(t)$ et M est la valeur moyenne de toutes les valeurs $M_i$. L'attribution du signal S(t) à la zone active i peut alors être considérée comme correcte si cette valeur $MM_i$ est supérieure à une certaine limite, égale par exemple à 1,414.

On notera par ailleurs que les valeurs $MM_i$ susmentionnées peuvent être calculées en remplaçant $S'(\omega)$ par $R'_i(\omega)$, de façon à obtenir une information sur la résolution spatiale des zones actives. En particulier, on peut ainsi vérifier qu'une zone active d'indice i ne risque pas d'être confondue avec une autre, en vérifiant que la valeur $MM_i$ correspondante est supérieure à une limite prédéterminée, par exemple supérieur à 1,414.

Par ailleurs, il est également possible de tenir compte de différents paramètres d'ambiance (température, hygrométrie, contraintes mécaniques, etc.) en modifiant les signaux prédéterminés de la bibliothèque de signaux en fonction du ou des paramètres d'ambiance.

A cet effet, on peut faire appel à l'une des méthodes de correction suivantes :

- dilation ou contraction temporelle linéaire des signaux de référence de la bibliothèque de signaux : dans ce cas, les signaux de référence $R_i(t)$ de la bibliothèque de signaux sont remplacés par des signaux $R_i(\alpha t)$, ou $\alpha$ est un coefficient multiplicateur positif non nul qui est fonction des paramètres d'ambiance, ce coefficient $\alpha$ pouvant être déterminé théoriquement, ou encore expérimentalement pour un matériau donné, ou encore expérimentalement pour chaque objet 5 ;
- dilatation ou contraction temporelle linéaire des signaux captés S(t) : dans ce cas, les signaux de référence $R_i(t)$ sont laissés inchangés, mais le signal capté S(t) est remplacé par $S(\alpha t)$ où $\alpha$ est un coefficient tel que défini ci-dessus ;
- dilatation ou contraction non linéaire en fréquence des signaux de référence : dans ce cas, on remplace les signaux fréquentiels $R'_i(\omega)$ par $R'_i(\omega')$, avec

$$\omega' = \frac{\omega\beta^2}{1+\sqrt{(\omega/\omega_N).(\beta-1)}}$$ , où $\omega_N$ est égal à la moitié de la fréquence d'échantillonnage du dispositif de traitement,

et $\beta$ est un coefficient déterminé de façon théorique ou expérimentale ;

- Dilation ou contraction non linéaire en fréquence du signal capté S(t) : dans ce cas, les signaux de référence de la bibliothèque de signaux sont laissés inchangés, et le signal $S'(\omega)$ est remplacé par $S'(\omega')$, $\omega'$ étant défini ci-dessus.

Dans les deux cas susmentionnés de dilatation ou contraction non linéaire en fréquence, il est possible en outre de faire appel à une correction de phase moyennée, auquel cas les signaux $R_i(\omega')$ sont remplacés par $R_i(\omega').M'(\omega)/N'(\omega)$ ou les signaux $S(\omega')$ sont remplacés par $S(\omega') .M'(\omega)/N'(\omega)$. Dans l'une ou l'autre de ces formules, $N'(\omega)=M(\omega)/|M(\omega)|$, et $N'(\omega)=N(\omega)/|N(\omega)|$, $M(\omega)$ étant égale à la moyenne de tous les $R_i(\omega)$ et $N(\omega)$ étant égal à la moyenne de tous les $R_i(\omega')$.

Les différentes corrections susmentionnées des signaux de référence $R_i(\omega)$ ou du signal capté $S(\omega)$ peuvent être effectués soit de façon automatique par l'unité centrale 2, notamment en fonction d'informations données par un ou plusieurs capteurs (non représentés), ou manuellement par l'utilisateur.

Par ailleurs, on notera que l'unité centrale 2 peut comporter plusieurs bibliothèques de signaux de références adaptés à différentes valeurs des paramètres d'ambiance.

Par ailleurs, pour s'adapter aux types d'impacts générés lors de l'utilisation du dispositif, et notamment pour s'adapter à l'utilisation soit d'un doigt de l'utilisateur, soit d'un autre objet pour générer les impacts, il peut être avantageux de demander à l'utilisateur de générer des impacts sur une ou plusieurs zones actives 10 prédéterminées, par exemple deux zones actives d'indices m et p. On capte ainsi deux signaux temporels $S_m(t)$ et $S_P(t)$, dont on calcule les transformées de Fourier $S_m(\omega)$ et $S_p(\omega)$, puis on calcule la moyenne $M_1(\omega)$ des deux termes suivants :

- $(R_m(\omega) \cdot |S_m(\omega)|) / (|R_m(\omega)| \cdot S_m(\omega))$ ,

- et $(R_p(\omega) \cdot |S_p(\omega)|) / (|R_p(\omega)| \cdot S_p(\omega))$ .

Cette moyenne $M_1(\omega)$ est ensuite utilisée à l'étape (3) définie précédemment pour remplacer le produit $P_i(\omega)$ par $M_1(\omega).P_i(\omega)$, ce produit étant ensuite utilisé à la place de $P_i(\omega)$ à l'étape (4) .

Par ailleurs, on notera que l'invention permet à un utilisateur de définir à sa guise des zones actives, et l'unité centrale 2 peut être adaptée pour maintenir active cette définition des zones actives uniquement pendant l'utilisation effective de l'objet 5 comme interface acoustique. Dans ce cas, la définition susmentionnée des zones actives est effacée par l'unité centrale 2 après une certaine période d'inutilisation du dispositif.

On notera également que la fonction générée par un impact sur une zone active peut être modulé le cas échéant en fonction de l'intensité de cet impact.

On notera également que, lorsque l'objet 5 présente des phénomènes de résonance qui entraînent des propagations prolongées d'ondes acoustiques à chaque impact sur les zones actives, il peut être avantageux de rehausser le seuil de détection des signaux acoustiques S(t) (par exemple jusqu'à 0,5 fois la valeur maximale admissible par le système électronique d'acquisition du signal S(t)) lorsqu'un signal S(t) a été détecté, puis de rabaisser ce seuil de détection (notamment de façon exponentielle) jusqu'à son niveau normal : ainsi, on évite des détections multiples d'un même impact.

On notera que, dans tous les modes de réalisation de l'invention, il serait éventuellement possible de définir une seule zone active sur l'objet 5, auquel cas il est néanmoins possible de coder plusieurs fonctions sur cette zone active unique, par exemple suivant le nombre d'impacts générés consécutivement sur la même zone.

Par ailleurs, les zones actives 10 peuvent éventuellement ne pas être définies à l'avance, mais être simplement définies en fonction des impacts successifs reçus lors de l'utilisation du dispositif. Ainsi, le dispositif peut par exemple être conçu pour comporter trois zones actives, qui sont simplement définies chacune à la réception d'un premier impact sur chaque zone, et qui sont ensuite reconnues comme "première zone", "deuxième zone", et "troisième zone", à réception des impacts suivants.

Par ailleurs, lorsque les zones actives sont très nombreuses, on peut le cas échéant faire appel à un dispositif automatisé pour générer les signaux de référence stockés dans la bibliothèque de signaux au cours de la phase d'apprentissage. Ce dispositif automatisé pourrait par exemple comporter un système de déplacement à deux dimensions, comportant deux moteurs pas à pas, pour déplacer par exemple un stylet d'excitation ou similaire à la surface de l'objet 5 et pour générer des impacts au moyen de ce stylet, actionné par exemple par un solénoïde, au niveau des différentes zones actives.

Toujours dans le cas où les zones actives 10 sont très nombreuses, il peut être possible de les répartir en plusieurs groupes de ressemblance. Dans ce cas, lors de l'utilisation courante du dispositif, lorsqu'un impact génère un signal S(t), un premier traitement permet de rattacher ce signal S(t) à l'un des groupes de ressemblance, puis un traitement affiné permet d'affecter ce signal S(t) à l'une des zones actives de ce groupe de ressemblance.

On notera aussi que la même unité centrale 2 pourrait le cas échéant traiter les signaux provenant de plusieurs objets 5. De plus, il est également possible d'interfacer directement le ou les capteurs acoustiques avec un réseau notamment IP, de façon à diriger les signaux captés vers une adresse IP unique à partir de laquelle ces signaux peuvent être exploités par n'importe quel ordinateur connecté au réseau IP.

**Revendications**

**Revendications pour l'(les) Etat(s) contractant(s) suivant(s): GB**

1. Procédé dans lequel on localise un impact sur une surface (9, 15, 17, 22) appartenant à un objet (5, 3, 16, 18) formant interface acoustique, doté d'au moins un capteur acoustique (6), procédé dans lequel on capte au moins un signal à partir d'ondes acoustiques générées dans l'objet formant interface acoustique (5, 3, 16, 18) par ledit impact et on localise l'impact par traitement dudit signal capté,
**caractérisé en ce qu'**il comporte une étape de reconnaissance au cours de laquelle on compare le signal capté à au moins un signal prédéterminé correspondant au signal qui est capté lorsqu'on génère un impact sur au moins une zone active (10) appartenant à la surface de l'objet formant interface acoustique (5, 3, 16, 18), et on associe l'impact à ladite zone active (10) si le signal capté est suffisamment voisin dudit signal prédéterminé, à l'exclusion d'une comparaison de signaux consistant à comparer les spectres en amplitude du signal capté et d'au moins un signal prédéterminé.

2. Procédé selon la revendication 1, dans lequel la surface de l'objet formant interface acoustique comporte plusieurs zones actives (10), et au cours de l'étape de reconnaissance, on compare le signal capté à plusieurs signaux prédéterminés correspondant chacun au signal capté lorsqu'on génère un impact sur une desdites zones actives (10).

3. Procédé selon la revendication 1 ou la revendication 2, dans lequel on utilise plusieurs capteurs acoustiques (6) et au cours de l'étape de reconnaissance, on capte un signal pour chaque capteur acoustiques et les signaux captés par les différents capteurs acoustiques sont comparés aux signaux prédéterminés indépendamment les uns des autres.

4. Procédé selon l'une quelconque des revendications précédentes, dans lequel on utilise plusieurs capteurs acoustiques (6) et au cours de l'étape de reconnaissance, on capte un signal pour chaque capteur acoustiques et les signaux captés par les différents capteurs acoustiques sont comparés aux signaux prédéterminés différemment les uns des autres.

5. Procédé selon l'une quelconque des revendications précédentes, dans lequel on utilise plusieurs capteurs acoustiques (6) mesurant plusieurs grandeurs différentes.

6. Procédé selon l'une quelconque des revendications précédentes, dans lequel on utilise au plus deux capteurs acoustiques.

7. Procédé selon la revendication 1 ou la revendication 2, dans lequel on utilise un seul capteur acoustique (6).

8. Procédé selon l'une quelconque des revendications précédentes, comprenant une étape initiale d'apprentissage au cours de laquelle on détermine expérimentalement chaque signal prédéterminé en générant au moins un impact sur chaque zone active (10).

9. Procédé selon l'une quelconque des revendications 1 à 8, dans lequel chaque signal prédéterminé est un signal théorique.

10. Procédé selon l'une quelconque des revendications précédentes, dans lequel au cours de l'étape de reconnaissance, on compare le signal capté audit au moins un signal prédéterminé par intercorrélation.

11. Procédé selon l'une quelconque des revendications 1 à 9, dans lequel au cours de l'étape de reconnaissance, on compare le signal capté audit au moins un signal prédéterminé par un procédé de reconnaissance choisi parmi une reconnaissance vocale, une reconnaissance de signaux une reconnaissance de forme, et une reconnaissance par réseau neuronal.

12. Procédé selon l'une quelconque des revendications précédentes, dans lequel au cours de l'étape de reconnaissance, on associe le signal capté soit à une seule zone active, soit à aucune zone active.

13. Procédé selon la revendication 12, dans lequel on associe chaque zone active à une information prédéterminée et lorsqu'on associe l'impact à une zone active, on fait utiliser l'information prédéterminée correspondant à cette zone active par un dispositif électronique.

**14.** Procédé selon l'une quelconque des revendications 12 et 13, dans lequel la surface (9, 15, 17, 22) de l'objet formant interface acoustique comporte un nombre n de zones actives (10), n étant au moins égal à 2, et l'étape de reconnaissance comprend les sous-étapes suivantes :

- on procède à une intercorrélation du signal capté avec lesdits signaux prédéterminés Ri(t), i étant un entier naturel compris entre 1 et n qui désigne une zone active, et on obtient ainsi des fonctions d'intercorrélation Ci (t),
- on détermine une zone active j potentiellement activée qui correspond au résultat d'intercorrélation Cj(t) ayant un maximum d'amplitude plus élevée que ceux des autres résultats Ci(t),
- on détermine également la distribution D(i) des maxima d'amplitude des résultats d'intercorrélation :

$$D(i) =Max((Ci(t))),$$

- on détermine également la distribution D'(i) des maxima d'amplitude des résultats d'intercorrélation C'i(t) entre Rj(t) et les différents signaux prédéterminés Ri(t) :

$$D'(i)=Max((C'i(t))),$$

- on détermine si l'impact a été généré sur la zone active j en fonction d'un niveau de corrélation entre les distributions D(i) et D'(i).

**15.** Procédé selon l'une quelconque des revendications 12 et 13, dans lequel au cours de l'étape de reconnaissance, on traite le signal capté pour en extraire des données représentatives de certaines caractéristiques du signal capté et on compare les données ainsi extraites à des données de référence extraites du signal qui est capté lorsqu'un impact est généré sur chaque zone active.

**16.** Procédé selon la revendication 15, dans lequel au cours de l'étape de reconnaissance, on détermine un code à partir desdites données extraites du signal capté et on compare ce code à une table qui donne une correspondance entre au moins certains codes et chaque zone active.

**17.** Procédé selon l'une quelconque des revendications 1 à 14, dans lequel l'objet formant interface acoustique (5, 3, 16, 18) comporte au moins deux zones actives (10) et au cours de l'étape de reconnaissance, on détermine des valeurs de ressemblance représentatives de la ressemblance entre le signal capté et les signaux prédéterminés, on associe l'impact (I) avec plusieurs zones actives adjacentes(R1-R4) correspondant à un maximum de ressemblance, dites zones actives de référence, puis on détermine la position de l'impact (I) sur la surface en fonction des valeurs de ressemblance attribuées aux zones actives de référence(R1-R4).

**18.** Procédé selon la revendication 17, dans lequel on détermine la position de l'impact (I) sur la surface de façon que les valeurs de ressemblance attribuées aux zones actives de référence (R1-R4), correspondent le plus possible à des valeurs de ressemblance théoriques calculées pour lesdites zones actives de référence pour un impact généré dans ladite position sur la surface.

**19.** Procédé selon la revendication 18, dans lequel on détermine la position de l'impact (I) sur la surface de façon que les valeurs de ressemblance attribuées aux zones actives de référence (R1-R4), correspondent le mieux possible à des valeurs de ressemblance théoriques calculées pour lesdites zones actives de référence pour un impact généré dans ladite position sur la surface.

**20.** Procédé selon la revendication 19, dans lequel les valeurs de ressemblance théoriques sont des fonctions de la position de l'impact sur la surface, déterminées à l'avance pour chaque ensemble possible de zones actives de référence (R1-R4).

**21.** Procédé selon la revendication 8, dans lequel on identifie la zone active par comparaison entre la phase des signaux prédéterminés Ri(t) et du signal capté.

**22.** Procédé selon la revendication 21, dans lequel :

- lors de la phase d'apprentissage, on calcule la transformée de Fourier $R_i(\omega) = |Ri(\omega)| \cdot e^{j\,\varphi i(\omega)}$ de chaque signal acoustique $Ri(t)$ généré par un impact sur la zone active i, où i est un indice compris entre 1 et n, et on ne conserve de cette transformée de Fourier que la composante de phase $e^{j\,\varphi i(\omega)}$, dans les seules bandes de fréquence $\omega$ où l'amplitude $|Ri(\omega)|$ est supérieure à un seuil prédéterminé,
- puis on applique le même traitement à chaque signal acoustique capté $S(t)$ pendant le fonctionnement normal du dispositif.

**23.** Procédé selon la revendication 22, dans lequel Le seuil prédéterminé est égal au maximum de MAX/D et de $|B(\omega)|$, où:

- MAX est choisi parmi la valeur maximale des modules $|Ri(\omega)|$, la valeur maximale des modules $|Ri(\omega)|$ normalisés chacun en énergie, et la valeur maximale de l'enveloppe de la moyenne des modules $|Ri(\omega)|$ normalisés chacun en énergie,
- D est une constante,
- $|B(\omega)|$ est la moyenne de plusieurs spectres de bruit dans l'objet formant interface acoustique, acquis à différents instants.

**24.** Procédé selon la revendication 22 ou la revendication 23, dans lequel pendant le fonctionnement normal du dispositif :

- on calcule un produit $P_i(\omega)$ égal à $S'(\omega)$ multiplié par le conjugué de $R_i'(\omega)$ pour références i = 1 ... n,
- puis on normalise les produits $P_i(\omega)$,
- on effectue ensuite la transformée de Fourier inverse de tous les produits $P_i(\omega)$, et on obtient des fonctions temporelles $X_i(t)$,
- et on attribue le signal $S(t)$ à une zone active (10) en fonction desdites fonctions temporelles $X_i(t)$.

**25.** Procédé selon la revendication 24, dans lequel on attribue le signal $S(t)$ à une zone active (10) en fonction des valeurs maximales desdites fonctions temporelles $X_i(t)$.

**26.** Dispositif spécialement adapté pour mettre en oeuvre un procédé selon l'une quelconque des revendications précédentes, destiné à localiser un impact sur une surface (9, 15, 17, 22) appartenant à un objet (5, 3, 16, 18) formant interface acoustique, doté d'au moins un capteur acoustique (6), ce dispositif comprenant des moyens pour capter au moins un signal à partir d'ondes acoustiques générées dans l'objet formant interface acoustique (5, 3, 16, 18) par ledit impact, et des moyens pour localiser l'impact par traitement dudit signal capté,
**caractérisé en ce qu'**il comporte des moyens de reconnaissance adaptés pour comparer le signal capté à au moins un signal prédéterminé correspondant au signal qui est capté lorsqu'on génère un impact sur au moins une zone active (10) appartenant à la surface de l'objet (5, 3, 16, 18), et des moyens pour associer l'impact à ladite zone active (10) si le signal capté est suffisamment voisin dudit signal prédéterminé,
à l'exclusion de moyens de reconnaissance adaptés pour comparer des signaux par comparaison des spectres en amplitude du signal capté et d'au moins un signal prédéterminé.


**Revendications pour l'(les) Etat(s) contractant(s) suivant(s): AT, BE, CH, DE, DK, ES, FR, GR, IT, LI, LU, NL, SE, MC, PT, IE, SI**

**1.** Procédé dans lequel on localise un impact sur une surface (9, 15, 17, 22) appartenant à un objet (5, 3, 16, 18) formant interface acoustique, doté d'au moins un capteur acoustique (6), procédé dans lequel on capte au moins un signal à partir d'ondes acoustiques générées dans l'objet formant interface acoustique (5, 3, 16, 18) par ledit impact et on localise l'impact par traitement dudit signal capté,
**caractérisé en ce qu'**il comporte une étape de reconnaissance au cours de laquelle on compare le signal capté à au moins un signal prédéterminé correspondant au signal qui est capté lorsqu'on génère un impact sur au moins une zone active (10) appartenant à la surface de l'objet formant interface acoustique (5, 3, 16, 18), et on associe l'impact à ladite zone active (10) si le signal capté est suffisamment voisin dudit signal prédéterminé.

**2.** Procédé selon la revendication 1, dans lequel la surface de l'objet formant interface acoustique comporte plusieurs zones actives (10), et au cours de l'étape de reconnaissance, on compare le signal capté à plusieurs signaux prédéterminés correspondant chacun au signal capté lorsqu'on génère un impact sur une desdites zones actives (10).

**3.** Procédé selon la revendication 1 ou la revendication 2, dans lequel on utilise plusieurs capteurs acoustiques (6) et au cours de l'étape de reconnaissance, on capte un signal pour chaque capteur acoustiques et les signaux captés par les différents capteurs acoustiques sont comparés aux signaux prédéterminés indépendamment les uns des autres.

**4.** Procédé selon l'une quelconque des revendications précédentes, dans lequel on utilise plusieurs capteurs acoustiques (6) et au cours de l'étape de reconnaissance, on capte un signal pour chaque capteur acoustiques et les signaux captés par les différents capteurs acoustiques sont comparés aux signaux prédéterminés différemment les uns des autres.

**5.** Procédé selon l'une quelconque des revendications précédentes, dans lequel on utilise plusieurs capteurs acoustiques (6) mesurant plusieurs grandeurs différentes.

**6.** Procédé selon l'une quelconque des revendications précédentes, dans lequel on utilise au plus deux capteurs acoustiques.

**7.** Procédé selon la revendication 1 ou la revendication 2, dans lequel on utilise un seul capteur acoustique (6).

**8.** Procédé selon l'une quelconque des revendications précédentes, comprenant une étape initiale d'apprentissage au cours de laquelle on détermine expérimentalement chaque signal prédéterminé en générant au moins un impact sur chaque zone active (10).

**9.** Procédé selon l'une quelconque des revendications 1 à 8, dans lequel chaque signal prédéterminé est un signal théorique.

**10.** Procédé selon l'une quelconque des revendications précédentes, dans lequel au cours de l'étape de reconnaissance, on compare le signal capté audit au moins un signal prédéterminé par intercorrélation.

**11.** Procédé selon l'une quelconque des revendications 1 à 9, dans lequel au cours de l'étape de reconnaissance, on compare le signal capté audit au moins un signal prédéterminé par un procédé de reconnaissance choisi parmi une reconnaissance vocale, une reconnaissance de signaux une reconnaissance de forme, et une reconnaissance par réseau neuronal.

**12.** Procédé selon l'une quelconque des revendications précédentes, dans lequel au cours de l'étape de reconnaissance, on associe le signal capté soit à une seule zone active, soit à aucune zone active.

**13.** Procédé selon la revendication 12, dans lequel on associe chaque zone active à une information prédéterminée et lorsqu'on associe l'impact à une zone active, on fait utiliser l'information prédéterminée correspondant à cette zone active par un dispositif électronique.

**14.** Procédé selon l'une quelconque des revendications 12 et 13, dans lequel la surface (9, 15, 17, 22) de l'objet formant interface acoustique comporte un nombre n de zones actives (10), n étant au moins égal à 2, et l'étape de reconnaissance comprend les sous-étapes suivantes :

- on procède à une intercorrélation du signal capté avec lesdits signaux prédéterminés $R_i(t)$, i étant un entier naturel compris entre 1 et n qui désigne une zone active, et on obtient ainsi des fonctions d'intercorrélation $C_i(t)$,
- on détermine une zone active j potentiellement activée qui correspond au résultat d'intercorrélation $C_j(t)$ ayant un maximum d'amplitude plus élevée que ceux des autres résultats $C_i(t)$,
- on détermine également la distribution $D(i)$ des maxima d'amplitude des résultats d'intercorrélation :

$$D(i)=Max(\ (C_i(t)),$$

- on détermine également la distribution $D'(i)$ des maxima d'amplitude des résultats d'intercorrélation $C'_i(t)$ entre $R_j(t)$ et les différents signaux prédéterminés $R_i(t)$ :

$$D'(i) = Max( (C'i(t)),$$

- on détermine si l'impact a été généré sur la zone active j en fonction d'un niveau de corrélation entre les distribution D(i) et D'(i).

15. Procédé selon l'une quelconque des revendications 12 et 13, dans lequel au cours de l'étape de reconnaissance, on traite le signal capté pour en extraire des données représentatives de certaines caractéristiques du signal capté et on compare les données ainsi extraites à des données de référence extraites du signal qui est capté lorsqu'un impact est généré sur chaque zone active.

16. Procédé selon la revendication 15, dans lequel au cours de l'étape de reconnaissance, on détermine un code à partir desdites données extraites du signal capté et on compare ce code à une table qui donne une correspondance entre au moins certains codes et chaque zone active.

17. Procédé selon l'une quelconque des revendications 1 à 14, dans lequel l'objet formant interface acoustique (5, 3, 16, 18) comporte au moins deux zones actives (10) et au cours de l'étape de reconnaissance, on détermine des valeurs de ressemblance représentatives de la ressemblance entre le signal capté et les signaux prédéterminés, on associe l'impact (I) avec plusieurs zones actives adjacentes (R1-R4) correspondant à un maximum de ressemblance, dites zones actives de référence, puis on détermine la position de l'impact (I) sur la surface en fonction des valeurs de ressemblance attribuées aux zones actives de référence (R1-R4).

18. Procédé selon la revendication 17, dans lequel on détermine la position de l'impact (I) sur la surface de façon que les valeurs de ressemblance attribuées aux zones actives de référence (R1-R4), correspondent le plus possible à des valeurs de ressemblance théoriques calculées pour lesdites zones actives de référence pour un impact généré dans ladite position sur la surface.

19. Procédé selon la revendication 18, dans lequel on détermine la position de l'impact (I) sur la surface de façon que les valeurs de ressemblance attribuées aux zones actives de référence (R1-R4), correspondent le mieux possible à des valeurs de ressemblance théoriques calculées pour lesdites zones actives de référence pour un impact généré dans ladite position sur la surface.

20. Procédé selon la revendication 19, dans lequel les valeurs de ressemblance théoriques sont des fonctions de la position de l'impact sur la surface, déterminées à l'avance pour chaque ensemble possible de zones actives de référence (R1-R4).

21. Procédé selon la revendication 8, dans lequel on identifie la zone active par comparaison entre la phase des signaux prédéterminés Ri(t) et du signal capté.

22. Procédé selon la revendication 21, dans lequel :

- lors de la phase d'apprentissage, on calcule la transformée de Fourier $R_i(\omega) = |Ri(\omega)|.e^{j\,\varphi i(\omega)}$ de chaque signal acoustique $R_i(t)$ généré par un impact sur la zone active i, où i est un indice compris entre 1 et n, et on ne conserve de cette transformée de Fourier que la composante de phase $e^{j\,\varphi i(\omega)}$, dans les seules bandes de fréquence $\omega$ où l'amplitude $|Ri(\omega)|$ est supérieure à un seuil prédéterminé,
- puis on applique le même traitement à chaque signal acoustique capté S(t) pendant le fonctionnement normal du dispositif.

23. Procédé selon la revendication 22, dans lequel Le seuil prédéterminé est égal au maximum de MAX/D et de $|B(\omega)|$, où :

- MAX est choisi parmi la valeur maximale des modules $|R_i(\omega)|$, la valeur maximale des modules $|R_i(\omega)|$ normalisés chacun en énergie, et la valeur maximale de l'enveloppe de la moyenne des modules $|R_i(\omega)|$ normalisés chacun en énergie,
- D est une constante,
- $|B(\omega)|$ est la moyenne de plusieurs spectres de bruit dans l'objet formant interface acoustique, acquis à différents instants.

24. Procédé selon la revendication 22 ou la revendication 23, dans lequel pendant le fonctionnement normal du dispositif :

- on calcule un produit $P_i(\omega)$ égal à $S'(\omega)$ multiplié par le conjugué de $R_i'(\omega)$ pour références i = 1 ... n,
- puis on normalise les produits $P_i(\omega)$,
- on effectue ensuite la transformée de Fourier inverse de tous les produits $P_i(\omega)$, et on obtient des fonctions temporelles $X_i(t)$,
- et on attribue le signal S(t) à une zone active (10) en fonction desdites fonctions temporelles $X_i(t)$.

25. Procédé selon la revendication 24, dans lequel on attribue le signal S(t) à une zone active (10) en fonction des valeurs maximales desdites fonctions temporelles $X_i(t)$.

26. Dispositif spécialement adapté pour mettre en oeuvre un procédé selon l'une quelconque des revendications précédentes, destiné à localiser un impact sur une surface (9, 15, 17, 22) appartenant à un objet (5, 3, 16, 18) formant interface acoustique, doté d'au moins un capteur acoustique (6), ce dispositif comprenant des moyens pour capter au moins un signal à partir d'ondes acoustiques générées dans l'objet formant interface acoustique (5, 3, 16, 18) par ledit impact, et des moyens pour localiser l'impact par traitement dudit signal capté,
**caractérisé en ce qu'**il comporte des moyens de reconnaissance adaptés pour comparer le signal capté à au moins un signal prédéterminé correspondant au signal qui est capté lorsqu'on génère un impact sur au moins une zone active (10) appartenant à la surface de l'objet (5, 3, 16, 18), et des moyens pour associer l'impact à ladite zone active (10) si le signal capté est suffisamment voisin dudit signal prédéterminé.

**Claims**

**Claims for the following Contracting State(s): GB**

1. A method for locating an impact on a surface (9, 15, 17, 22) forming part of an object (5, 3, 16, 18) forming an acoustic interface, provided with at least one acoustic sensor (6), a method in which at least one signal is sensed from acoustic waves generated in the object forming an acoustic interface (5, 3, 16, 18) by said impact and the impact is located by processing of said sensed signal,
**characterized in that** it comprises a recognition step during which the sensed signal is compared with at least one predetermined signal corresponding to the signal that is sensed when an impact is generated on at least one active zone (10) forming part of the surface of the object forming an acoustic interface (5, 3, 16, 18) and the impact is associated with said active zone (10) if the sensed signal is sufficiently similar to said predetermined signal,
at the exclusion of a comparison of signals step of comparing the amplitude spectra of the sensed signal to at least one predetermined signal.

2. The method as claimed in claim 1, in which the surface of the object forming an acoustic interface comprises several active zones (10) and, during the recognition step, the sensed signal is compared with several predetermined signals each corresponding to the signal sensed when an impact is generated on one of said active zones (10).

3. The method as claimed in claim 1 or in claim 2, in which several acoustic sensors (6) are used and, during the recognition step, one signal is sensed for each acoustic sensor and the signals sensed by the different acoustic sensors are compared with the predetermined signals independently of one another.

4. The method as claimed in any one of the preceding claims, in which several acoustic sensors (6) are used and, during the recognition step, a signal is sensed for each acoustic sensor and the signals sensed by the various acoustic sensors are compared with the predetermined signals in a different way from one another.

5. The method as claimed in any one of the preceding claims, in which several acoustic sensors (6) are used measuring several different magnitudes.

6. The method as claimed in any one of the preceding claims, in which at most two acoustic sensors are used.

7. The method as claimed in claim 1 or in claim 2, in which a single acoustic sensor (6) is used.

8. The method as claimed in any one of the preceding claims, comprising art initial learning step during which each predetermined signal is determined experimentally by generating at least one impact on each active zone (10).

9. The method as claimed in any one of claims 1 to 8, in which each predetermined signal is a theoretical signal.

10. The method as claimed in any one of the preceding claims, in which, during the recognition step, the sensed signal is compared with said at least one predetermined signal by intercorrelation.

11. The method as claimed in any one of claims 1 to 9, in which, during the recognition step, the sensed signal is compared with said at least one predetermined signal by a process of recognition chosen from voice recognition, signal recognition, shape recognition and recognition by neural network.

12. The method as claimed in any one of the preceding claims, in which, during the recognition step, the sensed signal is associated either with a single active zone, or with no active zone.

13. The method as claimed in claim 12, in which each active zone is associated with a predetermined information element and, when the impact is associated with an active zone, an electronic device is made to use the predetermined information element corresponding to that active zone.

14. The method as claimed in either one of claims 12 and 13, in which the surface (9, 15, 17, 22) of the object forming an acoustic interface comprises a number n of active zones (10), n being at least equal to 2, and the recognition step comprises the following sub-steps:

- an intercorrelation is made between the sensed signal and said predetermined signals $R_i(t)$, i being a natural integer lying between 1 and n which designates an active zone, and intercorrelation functions $C_i(t)$ are thus obtained,
- a potentially activated active zone j is determined which corresponds to the result of Intercorrelation $C_j(t)$ having a maximum amplitude greater than those of the other results $C_i(t)$,
- the distribution D(i) of the amplitude maxima of the intercorrelation results is also determined:

$$D(i) = Max ( (Ci(t))),$$

- the distribution D'(i) of the amplitude maxima of the Intercorrelation results $C'_i(t)$ between $R_j(t)$ and the various predetermined signals $R_i(r)$ is also determined:

$$D'(i) = Max( (C'i(t))),$$

- a determination is made as to whether the impact was generated on the active zone j as a function of a level of correlation between the distributions D(i) and D'(i),

15. The method as claimed in either one of claims 12 and 13, in which, during the recognition step, the sensed signal is processed in order to extract therefrom the data representative of certain characteristics of the sensed signal and the data thus extracted is compared with reference data extracted from the signal that is sensed when an impact is generated on each active zone.

16. The method as claimed in claim 15, in which, during the recognition step, a code is determined from said data extracted from the sensed signal and this code is compared with a table which gives a correspondence between at least certain codes and each active zone.

17. The method as claimed in any one of claims 1 to 14, in which the object forming an acoustic interface (5, 3, 16, 18) comprises at least two active zones (10) and, during the recognition step, the resemblance values representative of the resemblance between the sensed signal and the predetermined signals are determined, the impact (I) is associated with several adjacent active zones (R1-R4) corresponding to a maximum resemblance, called reference active zones, then, the position of the impact (I) on the surface is determined as a function of the resemblance values attributed to the reference active zones (R1-R4).

18. The method as claimed in claim 17, in which the position of the impact (I) on the surface is determined such that the resemblance values attributed to the reference active zones (R1-R4) correspond as much as possible to the theoretical resemblance values computed for said reference active zones for an impact generated in said position on the surface.

19. The method as claimed in claim 18, in which the position of the impact (I) on the surface is determined such that the resemblance values attributed to the reference active zones (R1-R4) correspond as well as possible to theoretical resemblance values computed for said reference active zones for an impact generated in said position on the surface.

20. The method as claimed in claim 19, in which the theoretical resemblance values are functions of the position of the impact on the surface, determined in advance for each possible set of reference active zones (R1-R4).

21. The method as claimed in claim 8, in which the active zone is identified by comparison between the phase of the predetermined signals Ri(t) and of the sensed signal.

22. The method as claimed in claim 21, in which:

- a computation is made of the Fourier transform $R_1(\omega) = |Ri(\omega)|.e^{j\,\phi i(\omega)}$ of each acoustic signal $R_1(t)$ generated by an impact on the active zone i, where i is an index lying between 1 and n, and from this Fourier transform only the phase component $e^{j\,\phi i(\omega)}$ is retained, only in the frequency bands $\omega$ in which the amplitude $|Ri(\omega)|$ is greater than a predetermined threshold,
- then the same process is applied to each sensed acoustic signal S(t) during the normal operation of the device.

23. The method as claimed in claim 22, in which the predetermined threshold is equal to the maximum of MAX/D and $|B(\omega)|$, where:

- MAX is chosen from the maximal value of the modules $|R_i(\omega)|$, the maximal value of the modules $|R_i(\omega)|$ each normalized in energy, and the maximal value of the envelope of the average of the modules $|R_i(\omega)|$ each normalized in energy,
- D is a constant,
- $|B(\omega)|$ is the average of several noise spectra in the object forming an acoustic interface, acquired at different times.

24. The method as claimed in either one of claims 22 or 23 in which, during the normal operation of the device:

- a product $P_i(\omega)$ is computed equal to $S'(\omega)$ multiplied by the conjugate of $R_i'(\omega)$ for references i = 1 ... n,
- then the products $P_i(\omega)$ are normalized,
- then the inverse Fourier transform of all the products $P_i(\omega)$ is carried out and temporal functions $X_i(t)$ are obtained,
- and the signal S(t) is attributed to an active zone (10) as a function of said temporal functions $X_1(t)$.

25. The method as claimed in claim 24, in which the signal S(t) is attributed to an active zone (10) as a function of the maximal values of said temporal functions $X_i(t)$.

26. A device especially adapted to implement a method according to any one of the preceding claims, for locating an impact on a surface (9, 15, 17, 22) forming part of an object (5, 3, 16, 18) forming an acoustic interface, provided with at least one acoustic sensor (6), this device comprising means for sensing at least one signal from acoustic waves generated in the object forming an acoustic interface (5, 3, 16, 18) by said impact, and means for locating the impact by processing said sensed signal,
**characterized in that** it comprises recognition means suitable for comparing the sensed signal with at least one predetermined signal corresponding to the signal that is sensed when an impact is generated on at least one active zone (10) forming part of the surface of the object (5, 3, 16, 18), and means for associating the impact with said active zone (10) if the sensed signal is sufficiently similar to said predetermined signal,
at the exclusion of recognition means adapted to compare signals by a comparison the amplitude spectra of the sensed signal to at least one predetermined signal.

**Claims for the following Contracting State(s): AT, BE, CH, DE, DK, ES, FR, GR, IT, LI, LU, NL, SE, MC, PT, IE, SI**

1. A method for locating an impact on a surface (9, 15, 17, 22) forming part of an object (5, 3, 16, 18) forming an acoustic interface, provided with at least one acoustic sensor (6), a method in which at least one signal is sensed from acoustic waves generated in the object forming an acoustic interface (5, 3, 16, 18) by said impact and the impact is located by processing of said sensed signal,
**characterized in that** it comprises a recognition step during which the sensed signal is compared with at least one predetermined signal corresponding to the signal that is sensed when an impact is generated on at least one active zone (10) forming part of the surface of the object forming an acoustic interface (5, 3, 16, 18) and the impact is associated with said active zone (10) if the sensed signal is sufficiently similar to said predetermined signal.

2. The method as claimed in claim 1, in which the surface of the object forming an acoustic interface comprises several active zones (10) and, during the recognition step, the sensed signal is compared with several predetermined signals each corresponding to the signal sensed when an impact is generated on one of said active zones (10).

3. The method as claimed in claim 1 or in claim 2, in which several acoustic sensors (6) are used and, during the recognition step, one signal is sensed for each acoustic sensor and the signals sensed by the different acoustic sensors are compared with the predetermined signals independently of one another.

4. The method as claimed in any one of the preceding claims, in which several acoustic sensors (6) are used and, during the recognition step, a signal is sensed for each acoustic sensor and the signals sensed by the various acoustic sensors are compared with the predetermined signals in a different way from one another.

5. The method as claimed in any one of the preceding claims, in which several acoustic sensors (6) are used measuring several different magnitudes.

6. The method as claimed in any one of the preceding claims, in which at most two acoustic sensors are used.

7. The method as claimed in claim 1 or in claim 2, in which a single acoustic sensor (6) is used.

8. The method as claimed in any one of the preceding claims, comprising an initial learning step during which each predetermined signal is determined experimentally by generating at least one impact on each active zone (10).

9. The method as claimed in any one of claims 1 to 8, in which each predetermined signal is a theoretical signal.

10. The method as claimed in any one of the preceding claims, in which, during the recognition step, the sensed signal is compared with said at least one predetermined signal by intercorrelation.

11. The method as claimed in any one of claims 1 to 9, in which, during the recognition step, the sensed signal is compared with said at least one predetermined signal by a process of recognition chosen from voice recognition, signal recognition, shape recognition and recognition by neural network.

12. The method as claimed in any one of the preceding claims, in which, during the recognition step, the sensed signal is associated either with a single active zone, or with no active zone.

13. The method as claimed in claim 12, in which each active zone is associated with a predetermined Information clement and, when the impact is associated with an active zone, an electronic device is made to use the predetermined information element corresponding to that active zone.

14. The method as claimed in either one of claims 12 and 13, in which the surface (9, 15, 1'7, 22) of the object forming an acoustic interface comprises a number n of active zones (10), n being at least equal to 2, and the recognition step comprises the following sub-steps:

an intercorrelation is made between the sensed signal and said predetermined signals $R_i(t)$, i being a natural, integer lying between 1 and n which designates an active zone, and intercorrelation functions $C_i(t)$ are thus obtained,

- a potentially activated active zone j is determined which corresponds to the result of intercorrelation $C_j(t)$

having a maximum amplitude greater than those of the other results Ci(t),
- the distribution D(i) of the amplitude maxima of the intercorrelation results is also determined:

$$D(i) = Max ( (Ci(t))),$$

- the distribution D'(i) of the amplitude maxima of the intercorrelation results C'i(t) between Rj(t) and the various predetermined signals Ri(t) is also determined:

$$D'(i)= Max( (C'i(t))),$$

- a determination is made as to whether the impact was generated on the active zone j as a function of a level of correlation between the distributions D(i) and D'(i).

15. The method as claimed in either one of claims 12 and 13, in which, during the recognition step, the sensed signal is processed in order to extract therefrom the data representative of certain characteristics of the sensed signal and the data thus extracted is compared with reference data extracted from the signal that is sensed when an impact is generated on each active zone.

16. The method as claimed in claim 15, in which, during the recognition step, a code is determined from said data extracted from the sensed signal and this code is compared with a table which gives a correspondence between at least certain codes and each active zone.

17. The method as claimed in any one of claims 1 to 14, in which the object forming an acoustic interface (5, 3, 16, 18) comprises at least two active zones (10) and, during the recognition step, the resemblance values representative of the resemblance between the sensed signal and the predetermined signals are determined, the impact (I) is associated with several adjacent active zones (R1-R4) corresponding to a maximum resemblance, called reference active zones, then, the position of the impact (I) on the surface is determined as a function of the resemblance values attributed to the reference active zones (R1-R4).

18. The method as claimed in claim 17, in which the position of the impact (1) on the surface is determined such that the resemblance values attributed to the reference active zones (R1-RM) correspond as much as possible to the theoretical resemblance values computed for said reference active zones for an impact generated in said position on the surface.

19. The method as claimed in claim 18, in which the position of the impact (1) on the surface is determined such that the resemblance values attributed to the reference active zones (R1-R4) correspond as well as possible to theoretical resemblance values computed for said reference active zones for an impact generated in said position on the surface.

20. The method as claimed in claim 19, in which the theoretical resemblance values are functions of the position of the impact on the surface, determined in advance for each possible set of reference active zones (R1-R4).

21. The method as claimed in claim 8, in which the active zone is identified by comparison between the phase of the predetermined signals Ri(t) and of the sensed signal.

22. The method as claimed in claim 21, in which:

- a computation is made of the Fourier transform $R_1(\omega) =|Ri(\omega)|.e^{j \phi i(\omega)}$ of each acoustic signal $R_1(t)$ generated by an impact on the active zone i, where i is an index lying between 1 and n, and from this Fourier transform only the phase component $e^{j \phi i(\omega)}$ is retained, only in the frequency bands ω in which the amplitude $|Ri(\omega)|$ is greater than a predetermined threshold,
- then the same process is applied to each sensed acoustic signal S(t) during the normal operation of the device.

23. The method as claimed in claim 22, in which the predetermined threshold is equal to the maximum of MAX/D and $|B(\omega)|$, where:

- MAX is chosen from the maximal value of the modules $|R_1(\omega)|$, the maximal value of the modules $|R_1(\omega)|$ each normalized in energy, and the maximal value of the envelope of the average of the modules $|R_i(\omega)|$ each normalized in energy,
- D is a Constant,
- $|B(\omega)|$ is the average of several noise spectra in the object forming an acoustic interface, acquired at different times.

**24.** The method as claimed in either one of claims 22 or 23 in which, during the normal operation of the device:

- a product $P_i(\omega)$ is computed equal to $S'(\omega)$ multiplied by the conjugate of $R_i'(\omega)$ for references i = 1 ... n,
- then the products $P_i(\omega)$ are normalized,
- then the inverse Fourier transform of all the products $P_i(\omega)$ is carried out and temporal functions $X_i(t)$ are obtained,
- and the signal S(t) is attributed to an active zone (10) as a function of said temporal functions $X_i(t)$.

**25.** The method as claimed in claim 24, in which the signal S(t) is attributed to an active zone (10) as a function of the maximal values of said temporal functions $x_1(t)$.

**26.** A device especially adapted to implement a method according to any one of the preceding claims, for locating an impact on a surface (9, 15, 17, 22) forming part of an object (5, 3, 16, 18) forming an acoustic interface, provided with at least one acoustic sensor (6), this device comprising means for sensing at least one signal from acoustic waves generated in the object forming an acoustic interface (5, 3, 16, 18) by said impact, and means for locating the impact by processing said sensed signal,
**characterized in that** it comprises recognition means suitable for comparing the sensed signal with at least one predetermined signal corresponding to the signal that is sensed when an impact is generated on at least one active zone (10) forming part of the surface of the object (5, 3, 16, 18), and means for associating the impact with said active zone (10) if the sensed signal is sufficiently similar to said predetermined signal.


**Patentansprüche**


**Patentansprüche für folgende(n) Vertragsstaat(en): GB**

**1.** Verfahren bei dem ein Einschlag auf eine Oberfläche (9, 15, 17, 22) geortet wird, die zu einem eine akustische Schnittstelle bildenden Objekt (5, 3, 16, 18) gehört, das mindestens mit einem Akustiksensor (6) ausgestattet ist, wobei bei dem Verfahren mindestens ein Signal aufgefangen wird, das von Schallwellen ausgeht, die in dem die akustische Schnittstelle bildenden Objekt (5, 3, 16, 18) durch den Einschlag generiert werden, und bei dem der Einschlag durch Verarbeitung des aufgefangenen Signals geortet wird,
**dadurch gekennzeichnet, dass** es einen Erkennungsschritt aufweist, wobei das aufgefangene Signal mit mindestens einem vorbestimmten Signal verglichen wird, das dem Signal entspricht, das aufgefangen wird, wenn ein Einschlag auf mindestens einen aktiven Bereich (10) erfolgt, der zur Oberfläche des Objekts gehört, das die akustische Schnittstelle (5, 3, 16, 18) bildet, und dass der Einschlag dem genannten aktiven Bereich (10) zugeordnet wird, wenn das aufgefangene Signal dem vorbestimmten Signal in hinreichendem Maße ähnlich ist,
unter Ausschluss des Vergleichs von Signalen, der darin besteht, dass die Amplitudenspektren des aufgefangenen Signals mit mindestens einem vorbestimmten Signal verglichen werden.

**2.** Verfahren gemäß Anspruch 1, wobei die Oberfläche des die akustische Schnittstelle bildenden Objektes mehrere aktive Bereiche (10) aufweist, und wobei im Erkennunysschritt das aufgefangene Signal mit mehreren vorbestimmten Signalen verglichen wird, von denen ein jedes dem Signal entspricht, das aufgefangen wird, wenn ein Einschlag auf eine der genannten aktiven Bereiche (10) ausgelöst wird.

**3.** Verfahren gemäß Anspruch 1 oder 2, wobei mehrere Akustiksensoren (6) verwendet werden und wobei im Erkennungsschritt ein Signal durch jeden Akustiksensor aufgefangen wird und die von den verschiedenen Akustiksensoren aufgefangenen Signale unabhängig voneinander mit dem vorbestimmten Signalen verglichen werden.

**4.** Verfahren gemäß einem der vorstehenden Ansprüche, wobei mehrere Akustiksensoren (6) verwendet werden und im Erkennungsschritt durch jeden Akustiksensor ein Signal aufgefangen wird, und die von den verschiedenen Akustiksensoren aufgefangenen Signale mit den vorbestimmten, jeweils unterschiedlichen Signalen verglichen werden.

5. Verfahren gemäß einem der vorstehenden Ansprüche, wobei mehrere Akustiksensoren (10) zur Messung von mehreren verschiedenen Größen verwendet werden.

6. Verfahren gemäß einem der vorstehenden Ansprüche, wobei höchstens zwei akustische Sensoren eingesetzt werden.

7. Verfahren gemäß Anspruch 1 oder 2, wobei ein einziger akustischer Sensor (6) eingesetzt, wird.

8. Verfahren gemäß einem der vorstehenden Ansprüche, das zu Beginn einen Lernschritt aufweist, während dessen experimentell jedes vorbestimmte Signal ermittelt wird, indem mindestens ein Einschlag auf jeden aktiven Bereich (10) erzeugt wird.

9. Verfahren gemäß einem der Ansprüche 1 - 8, wobei es sich bei jedem vorbestimmten Signal um ein theoretisches Signal handelt.

10. Verfahren gemäß einem der vorstehenden Ansprüche, wobei im Erkennungsschritt das aufgefangene Signal mit mindestens einem der genannten, vorbestimmten Signale durch Interkorrelation verglichen wird.

11. Verfahren gemäß einem der Ansprüche 1 - 9, wobei im Erkennungsschritt das aufgefangene Signal mit dem mindestens einen Signal verglichen wird, das durch ein Erkennungsverfahren ausgewählt aus einer Spracherkennung, einer Signalerkennung, einer Formenerkennung und einer Erkennung durch neuronale Netze vorbestimmt wurde.

12. Verfahren gemäß einem der vorstehenden Ansprüche, wobei im Erkennungsschritt ein aufgefangenes Signal entweder einem einzigen oder keinem aktiven Bereich zugeordnet wird.

13. Verfahren gemäß Anspruch 12, wobei jedem aktiven Bereich eine vorbestimmte Information zugeordnet, wird, und wobei, wenn der Einschlag einem aktivem Bereich zugeordnet wird, die dem entsprechenden Bereich zugeordnete, vorbestimmte Information durch eine elektronische Vorrichtung verwendet wird.

14. Verfahren gemäß einem der Ansprüche 12 und 13, bei dem die Oberfläche (9, 15, 17, 22) des Objektes, das die akustische Schnittstelle bildet, eine Anzahl n von aktiven Bereichen (10) aufweist, wobei n mindestens gleich 2 ist und wobei der Erkennungsschritt folgende Zwischenschritte aufweist:

- Durchführen einer Interkorrelation des aufgefangenen Signals mit den vorbestimmten Signalen $R_i(t)$, wobei i eine natürliche ganze Zahl zwischen 1 und n ist, die einen aktiven Bereich bezeichnet, und somit Gewinnen von Interkorrelationsfunktionen $C_i(t)$,
- Bestimmen eines potentiellen aktivierten, aktiven Bereichs j, der dem Ergebnis der Interkorrelation $C_j(t)$ entspricht, das einen Amplitudenhöchstwert aufweist, der den der anderen Ergebnisse $C_i(t)$ überschreitet,
- ebenfalls Bestimmen, der Verteilung $D(i)$ der Amplitudenhöchstwerte der Interkorrelationsergebnisse: $D = Max((C_i(t)))$,
- ebenfalls Bestimmen der Verteilung $D'(i)$ der Amplitudenhöchstwerte des Interkorrelationsergebnisse $C'_i(t)$ zwischen $R_j(t)$ und den verschiedenen vorbestimmten Signalen $R_i(t)$: $D'(i) = Max((C'(t)))$,
- Ermitteln, ob der Einschlag auf den aktiven Bereich j in Abhängigkeit von einem bestimmten Grad der Korrelation zwischen den Verteilungen $D(i)$ und $D'(i)$ ausgelöst wurde.

15. Verfahren gemäß einem der Ansprüche 12 und 13, wobei im Erkennungsschritt das aufgefangene Signal verarbeitet wird, um diesem repräsentative Daten einiger seiner Merkmale zu entnehmen und die auf diese Weise gewonnenen Daten mit Referenzdaten des Signals, das aufgefangen wurde, als auf jeden aktiven Bereich ein Einschlag ausgelöst wurde, zu vergleichen.

16. Verfahren gemäß Anspruch 15, wobei im Erkennungsschritt ausgehend von den vom aufgefangenen Signal gewonnenen Daten ein Code bestimmt und dieser Code mit einer Tabelle verglichen wird, die eine Übereinstimmung zwischen mindestens bestimmten Codes und jedem aktiven Bereich angibt.

17. Verfahren gemäß einem der Ansprüche 1 bis 14, wobei das objekt, das die akustische Schnittstelle (5, 3, 16, 19) bildet, mindestens zwei aktive Bereiche (10) aufweist und im Erkennungsschritt repräsentative Werte der Ähnlichkeit zwischen dem aufgefangenen Signal und den vorbestinunten Signalen festgestellt werden, der Einschlag (I) mehreren benachbarten aktiven Bereichen (R1-R4) zugeordnet wird, die ein Maximum an Ähnlichkeit aufweisen, die so genannten aktiven Referenzbereiche, und daraufhin der Ort des Einschlages (I) auf der Oberfläche in Abhängigkeit von Ähnlichkeitswerten bestimmt wird, die den aktiven Referenzbereichen (R1-R4) zugeordnet wurden.

18. Verfahren gemäß Anspruch 17, wobei der Ort des Einschlages (I) auf die Oberfläche bestimmt wird, indem an die aktiven Referenzbereiche (R1-R4) Ähnlichkeitswerte vergebenen werden, die in höchstmöglichem Maße den theoretischen Ähnlichkeitswerten entsprechen, die hinsichtlich der genannten aktiven Referenzbereiche in Bezug auf den an dem genannten Ort erfolgten Einschlag auf die Oberfläche berechnet wurden.

19. Verfahren gemäß Anspruch 18, wobei der Ort des Einschlages (I) auf die Oberfläche bestimmt wird, indem an die aktiven Iteferenzbereiche (R1-R4) die Ähnlichkeitswerte vergeben werden, die in bestmöglichem Maße den theoretischen Ähnlichkeitswerten entsprechen, die hinsichtlich der genannten aktiven Referenzbereiche in Bezug auf den an dem genannten Ort erfolgten Einschlag auf die Oberfläche berechnet wurden.

20. Verfahren gemäß Anspruch 19, wobei die theoretischen Ahnlichkeitswerte Funktionen des Ortes des Einschlages auf die Oberfläche sind, die im Voraus für jede mögliche Gruppe von aktiven Referenzbereichen (R1-R4) bestimmt werden.

21. Verfahren gemäß Anspruch 8, wobei der aktive Bereich durch vergleich zwischen der Phase der vorbestimmten Signale $R_i$ (t) und des aufgefangenen Signals identifiziert wird.

22. Verfahren gemäß Anspruch 21, wobei:

- im Lernschritt die Fouriertransformierte $P_i(\omega) = |R_i(\omega)| \cdot e^{j\,\varphi i(\omega)}$ jedes akustischen Signals $R_i(t)$ errechnet wird, das durch einen Einschlag auf den aktiven Bereich i erzeugt wird, wobei i ein Index zwischen 1, und n ist, und wobei dieser Fouriertransformierten lediglich die Phasenkomponente $e^{j\,\varphi i(\omega)}$ erhalten bleibt, und zwar nur im Bereich der Frequenzbänder $\omega$, in denen die Amplitude $|R_1(\omega)|$ einen vorbestimmten Schwellenwert überschreitet,
- und dann die gleiche Verarbeitung auf jedes aufgefangene akustische Signal 1 $S(t)$ bei gewöhnlichem Betrieb der Vorrichtung angewendet wird.

23. Verfahren gemäß Anspruch 22, wobei die vorbestimmte Schwelle gleich dem Maximalwert von MAX/D und $|B(\omega)|$ ist, oder:

- MAx ausgewählt wird zwischen dem Höchstwert der Module $|R_i(\omega)|$, dem Höchstwert der jeweils in Bezug auf die Energie normalisierten Module $|R_1(\omega)|$ und dem Höchstwert der Einhüllenden des Mittels der jeweils in Bezug auf die Energie normalisierten Module $|R_1(\omega)|$,
- D eine Konstante ist,
- $|B(\omega)|$ das Mittel mehrerer Rauschspektren ist, die zu verschiedenen Zeitpunkten in dem Objekt, das die akustische Schnittstelle bildet, erfasst wurden.

24. Verfahren gemäß Anspruch 22 oder 23, wobei im gewöhnlichen Betrieb der Verrichtung:

- ein Produkt $P_i(\omega)$ gleich $S'(\omega)$ multipliziert mit der Konjugierten $R_i'(\omega)$ für die Bezugswerte i = 1 ... n berechnet wird,
- dann die Produkte $P_i(\omega)$ normalisiert werden,
- daraufhin die inverse Fouriertransformierte aller Produkte $P_i(\omega)$ ausgeführt wird und temporale Funktionen $X_i(t)$ gewonnen werden;
- und dann das Signal $S(t)$ einem aktiven Bereich (10) in Abhängigkeit von den genannten temporären Funktionen $x_1(t)$ zugeordnet wird.

25. Verfahren gemäß Anspruch 24, wobei das Signal $S(t)$ einem aktiven Bereich (10) in Abhängigkeit von den Höchstwerten der genannten temporären Funktionen $X_i(t)$ zugeordnet wird.

26. Vorrichtung speziell angepasst zur Durchführung eines Verfahrens gemäß einem der vorstehenden Ansprüche zur Ortung eines Einschlags auf eine Oberfläche (9, 15, 17, 22), die zu einem Objekt (5, 3, 16, 18) gehört, das eine akustische Schnittstelle bildet, die mit mindestens einem Akustiksensor (6) ausgerüstet ist, wobei die Vorrichtung Mittel zum Auffangen mindestens eines Signals von Schallwellen, die in dem Objekt, das die akustische Schnittstelle bildet (5, 3, 16, 18), durch den genannten Einschlag erzeugt werden, und Mitteln zur Ortung des Einschlags durch die Verarbeitung des aufgefangenen Signals verfügt,

**dadurch gekennzeichnet, dass** sie Erkennungsmittel, die angepasst sind, das aufgefangene Signal mit mindestens einem vorbestimmten Signal, das dem Signal entspricht, das aufgefangen wird, wenn ein Einschlag auf mindestens einen aktiven Bereich (10), der zu einer Oberfläche des Objekts (5, 3, 16, 18) gehört, zu vergleichen, und Mittel zur Zuordnung des Einschlages auf den aktiven Bereich (10), wenn das aufgefangene Signal dem vorbestimmten Signal in ausreichendem Maße ähnelt, aufweist,

**unter Ausschluss** von Erkennungsmitteln, die angepasst sind, Signale durch den Vergleich der Amplitudenspektren des aufgefangenen Signals und mindestens einem vorbestimmten Signal zu vergleichen.

**Patentansprüche für folgende(n) Vertragsstaat(en): AT, BE, CH, DE, DK, ES, FR, GR, IT, LI, LU, NL, SE, MC, PT, IE, SI**

1. Verfahren bei dem ein Einschlag auf eine Oberfläche (9, 15, 17, 22) geortet wird, die zu einem eine akustische Schnittstelle bildenden Objekt (5, 3, 16, 18) gehört, das mindestens mit einem Akustiksensor (6) ausgestattet ist, wobei bei dem Verfahren mindestens ein Signal aufgefangen wird, das von Schallwellen ausgeht, die in dem die akustische Schnittstelle bildenden Objekt (5, 3, 16, 18) durch den Einschlag generiert werden, und bei dem der Einschlag durch Verarbeitung des aufgefangenen Signals geortet wird,
   **dadurch gekennzeichnet, dass** es einen Erkennungsschritt aufweist, wobei das aufgefangene Signal mit mindestens einem vorbestimmten Signal verglichen wird, das dem Signal entspricht, das aufgefangen wird, wenn ein Einschlag auf mindestens einen aktiven Bereich (10) erfolgt, der zur Oberfläche des Objekts gehört, das die akustische Schnittstelle (5, 3, 16, 18) bildet, und dass der Einschlag dem genannten aktiven Bereich (10) zugeordnet wird, wenn das aufgefangene Signal dem vorbestimmten Signal in hinreichendem Maße ähnlich ist.

2. Verfahren gemäß Anspruch 1, wobei die Oberfläche des die akustische Schnittstelle bildenden Objektes mehrere aktive Bereiche (10) aufweist, und wobei im Erkennungsschritt das aufgefangene Signal mit mehreren vorbestimmten Signalen verglichen wird, von denen ein jedes dem Signal entspricht, das aufgefangen wird, wenn ein Einschlag auf eine der genannten aktiven Bereiche (10) ausgelöst wird.

3. Verfahren gemäß Anspruch 1 oder 2, wobei mehrere Akustiksensoren (6) verwendet werden und wobei im Erkennungsschritt ein Signal durch jeden Akustiksensor aufgefangen wird und die von den verschiedenen Akustiksensoren aufgefangenen Signale unabhängig voneinander mit dem vorbestimmten Signalen verglichen werden.

4. Verfahren gemäß einem der vorstehenden Ansprüche, wobei mehrere Akustiksensoren (6) verwendet werden und im Erkennungsschritt durch jeden Akustiksensor ein Signal aufgefangen wird, und die von den verschiedenen Akustiksensoren aufgefangenen Signale mit den vorbestimmten, jeweils unterschiedlichen Signalen verglichen werden.

5. Verfahren gemäß einem der vorstehenden Ansprüche, wobei mehrere Akustiksensoren (10) zur Messung von mehreren verschiedenen Größen verwendet werden,

6. Verfahren gemäß einem der vorstehenden Ansprüche, wobei höchstens zwei akustische Sensoren eingesetzt werden.

7. Verfahren gemäß Anspruch 1 oder 2, wobei ein einziger akustischer Sensor (6) eingesetzt wird.

8. Verfahren gemäß einem der vorstehenden Ansprüche, das zu Beginn einen Lernschritt aufweist, während dessen experimentell jedes vorbestimmte Signal ermittelt wird, indem mindestens ein Einschlag auf jeden aktiven Bereich (10) erzeugt wird.

9. Verfahren gemäß einem der Ansprüche 1 - 8, wobei es sich bei jedem vorbestimmten Signal um ein theoretisches Signal handelt.

10. Verfahren gemäß einem der vorstehenden Ansprüche, wobei im Erkennungsschritt das aufgefangene Signal mit mindestens einem der genannten, vorbestimmten Signale durch Interkorrelation verglichen wird.

**11.** Verfahren gemäß einem der Ansprüche 1 - 9, wobei im Erkennungsschritt das aufgefangene Signal mit dem mindestens einen Signal verglichen wird, das durch ein Erkennungsverfahren ausgewählt aus einer Spracherkennung, einer Signalerkennung, einer Formenerkennung und einer Erkennung durch neuronale Netze vorbestimmt wurde.

**12.** Verfahren gemäß einem der vorstehenden Ansprüche, wobei im Erkennungsschritt ein aufgefangenes Signal entweder einem einzigen oder keinem aktiven Bereich zugeordnet wird.

**13.** Verfahren gemäß Anspruch 12, wobei jedem aktiven Bereich eine vorbestimmte Information zugeordnet wird, und wobei, wenn der Einschlag einem aktivem Bereich zugeordnet wird, die dem entsprechenden Bereich zugeordnete, vorbestimmte Information durch eine elektronische Vorrichtung verwendet wird.

**14.** Verfahren gemäß einem der Ansprüche 12 und 13, bei dem die Oberfläche (9, 15, 17, 22) des Objektes, das die akustische Schnittstelle bildet, eine Anzahl n von aktiven Bereichen (10) aufweist, wobei n mindestens gleich 2 ist und wobei der Erkennungssehritt folgende Zwischenschritte aufweist:

- Durchführen einer Interkorrelation des aufgefangenen Signals mit den vorbestimmten Signalen Ri(t), wobei i eine natürliche ganze Zahl zwischen 1 und n ist, die einen aktiven Bereich bezeichnet, und somit Gewinnen von Interkorrelationsfunktionen Ci(t),
- Bestimmen eines potentiellen aktivierten, aktiven Bereichs j, der dem Ergebnis der Interkorrelation Cj(t) entspricht, das einen Amplitudenhöchstwert aufweist, der den der anderen Ergebnisse Ci(t) überschreitet,
- ebenfalls Bestimmen der verteilung D(i) der Amplitudenhöchstwerte der Interkorrelationsergebnisse: D = Max ((Ci(t))),
- ebenfalls Bestimmen der Verteilung D'(i) der Amplitudenhöchstwerte des Interkorrelationsergebnisse C'i(t) zwischen Rj(t) und den verschiedenen vorbestimmten signalen Ri(t); D'(i) =Max((C'(t))),
- Ermitteln, ob der Einschlag auf den aktiven Bereich j in Abhängigkeit von einem bestimmten Grad der Korrelation zwischen den Verteilungen D(i) und D'(i) ausgelöst wurde.

**15.** Verfahren gemäß einem der Ansprüche 12 und 13, wobei im Erkennungsschritt das aufgefangene Signal verarbeitet wird, um diesem repräsentative Daten einiger seiner Merkmale zu entnehmen und die auf diese Weise gewonnenen Daten mit Referenzdaten des Signals, das aufgefangen wurde, als auf jeden aktiven Bereich ein Einschlag ausgelöst wurde, zu vergleichen.

**16.** Verfahren gemäß Anspruch 15, wobei im Erkennungsschritt ausgehend von den vom aufgefangenen Signal gewonnenen Daten ein Code bestimmt und dieser Code mit einer Tabelle verglichen wird, die eine Übereinstimmung zwischen mindestens bestimmten Codes und jedem aktiven Bereich angibt.

**17.** Verfahren gemäß einem der Ansprüche 1 bis 14, wobei das Objekt, das die akustische Schnittstelle (5, 3, 16, 19) bildet, mindestens zwei aktive Bereiche (10) aufweist und im Erkennungsschritt repräsentative Werte der Ähnlichkeit zwischen dem aufgefangenen Signal und den vorbestimmten Signalen festgestellt werden, der Einschlag (I) mehreren benachbarten aktiven Bereichen (R1-R4) zugeordnet wird, die ein Maximum an Ähnlichkeit aufweisen, die so genannten aktiven Referenzbereiche, und daraufhin der Ort des Einschlages (1) auf der Oberfläche in Abhängigkeit von Ahnlichkeitswerten bestimmt wird, die den aktiven Referenzbereichen (R1-R4) zugeordnet wurden.

**18.** Verfahren gemäß Anspruch 17, wobei der Ort des Einschlages (I) auf die Oberfläche bestimmt wird, indem an die aktiven Referenzbereiche (R1-R4) Ähnlichkeitswerte vergebenen werden, die in höchstmöglichem Maße den theoretischen Ähnlichkeitswerten entsprechen, die hinsichtlich der genannten aktiven Referenzbereiche in Bezug auf den an dem genannten Ort erfolgten Einschlag auf die Oberfläche berechnet wurden.

**19.** Verfahren gemäß Anspruch 18, wobei der Ort des Einschlages (I) auf die Oberfläche bestimmt wird, indem an die aktiven Referenzbereiche (R1-R4) die Ähnliehkeitswerte vergeben werden, die in bestmöglichem Maße den theoretischen Ähnlichkeitswerten entsprechen, die hinsichtlich der genannten aktiven Referenzbereiche in Bezug auf den an dem genannten Ort erfolgten Einschlag auf die Oberfläche berechnet wurden.

**20.** Verfahren gemäß Anspruch 19, wobei die theoretischen Ähnlichkeitswerte Funktionen des Ortes des Einschlages auf die Oberfläche sind, die im Voraus für jede mögliche Gruppe von aktiven Referenzbereichen (R1-R4) bestimmt werden.

**21.** Verfahren gemäß Anspruch 8, wobei der aktive Bereich durch Vergleich zwischen der Phase der vorbestimmten Signale Ri(t) und des aufgefangenen Signals identifiziert wird.

**22.** Verfahren gemäß Anspruch 21, wobei:

- im Lernschritt die Fouriertransformierte $P_i(\omega) = |R_i(\omega)| \cdot e^{j\,\varphi i(\omega)}$ jedes akustischen Signals Ri(t) errechnet wird, das durch einen Einschlag auf den aktiven Bereich i erzeugt wird, wobei i ein Index zwischen 1 und n ist, und wobei dieser Fouriertransformierten lediglich die Phasenkomponente $e^{j\,\varphi i(\omega)}$ erhalten bleibt, und zwar nur im Bereich der Frequenzbänder $\omega$, in denen die Amplitude $|R_i(\omega)|$ einen vorbestimmten Schwellenwert überschreitet,
- und dann die gleiche Verarbeitung auf jedes aufgefangene akustische Signal S(t) bei gewöhnlichem Betrieb der Vorrichtung angewendet wird.

**23.** Verfahren gemäß Anspruch 22, wobei die vorbestimmte Schwelle gleich dem Maximalwert von MAX/D und $|B(\omega)|$ ist, oder:

- MAX ausgewählt wird zwischen dem Höchstwert der Module $|R_i(\omega)|$, dem Höchstwert der jeweils in Bezug auf die Energie normalisierten Module $|R_i(\omega)|$ und dem Höchstwert der Einhüllenden des Mittels der jeweils in Bezug auf die Energie normalisierten Module $|R_i(\omega)|$,
- D eine Konstante ist,
- $|B(\omega)|$ das Mittel mehrerer Rauschspektren ist, die zu verschiedenen Zeitpunkten in dem Objekt, das die akustische Schnittstelle bildet, erfasst wurden.

**24.** Verfahren gemäß Anspruch 22 oder 23, wobei im gewöhnlichen Betrieb der Verrichtung:

- ein Produkt $P_1(\omega)$ gleich S' ($\omega$) multipliziert mit der Konjugierten $R_1$' ($\omega$) für die Bezugswerte i = 1 ... n berechnet wird,
- dann die Produkte $P_i(\omega)$ normalisiert werden,
- daraufhin die inverse Eouriertransformierte aller Produkte $P_i(\omega)$ ausgeführt wird und temporale Funktionen $X_i$ (t) gewonnen werden;
- und dann das Signal S(t) einem aktiven Bereich (10) in Abhängigkeit von den genannten temporären Funktionen $X_i$(t) zugeordnet wird.

**25.** Verfahren gemäß Anspruch 24, wobei das Signal S(t) einem aktiven Bereich (10) in Abhängigkeit von den Höchstwerten der genannten temporären Funktionen $X_i$(t) zugeordnet, wird.

**26.** vorrichtung speziell angepasst zur Durchführung eines Verfahrens gemäß einem der vorstehenden Ansprüche zur Ortung eines Einschlags auf eine Oberfläche (9, 15, 17, 22), die zu einem Objekt (5, 3, 16, 18) gehört, das eine akustische Schnittstelle bildet, die mit mindestens einem akustiksensor (6) ausgerüstet ist, wobei die Vorrichtung Mittel zum Auffangen mindestens eines Signals von Schallwellen, die in dem Objekt, das die akustische Schnittstelle bildet (5, 3, 16, 18), durch den genannten Einschlag erzeugt werden, und Mitteln zur Ortung des Einschlags durch die Verarbeitung des aufgefangenen Signals verfügt,
**dadurch gekennzeichnet, dass** sie Erkennungsmittel, die angepasst sind, das aufgefangene Signal mit mindestens einem vorbestimmten Signal, das dem Signal entspricht, das aufgefangen wird, wenn ein Einschlag auf mindestens einen aktiven Bereich (10), der zu einer Oberfläche des Objekts (5, 3, 16, 18) gehört, zu vergleichen, und Mittel zur Zuordnung des Einschlages auf den aktiven Bereich (10), wenn das aufgefangene Signal dem vorbestimmten Signal in ausreichendem Maße ähnelt, aufweist.

**FIG. 1**

**FIG. 2**

**FIG. 3**

# FIG. 4

# FIG. 5

**FIG. 7**

**FIG. 6**

**FIG. 8**

**FIG. 9**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2811107 A